# EUROPEAN PATENT APPLICATION

(11) **EP 4 694 552 A1**
(43) Date of publication of application: **11.02.2026**
(21) Application number: 23931268.9
(22) Date of filing: 04.04.2023
(51) Int. Cl.: H04W 76/15

(54) **MULTI-PATH COMMUNICATION METHOD AND APPARATUS**

(71) Applicant: FUJITSU LIMITED, Kawasaki-shi, Kanagawa 211-8588 (JP)
(72) Inventor: LI, Guorong, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2023/086185
(87) International publication number: WO 2024/207195

(57) **Abstract**

Embodiments of this disclosure provide a multi-path communication method and apparatus. The remote terminal equipment receives first indication information transmitted by the relay terminal equipment or second indication information transmitted by the network device, and triggers or transmits a first PC5-RRC message to the relay terminal equipment according to the first indication information or the second indication information, the first PC5-RRC message being used to bring the relay terminal equipment into a radio resource control connected state. Hence, the relay terminal equipment is enabled to provide relay services for the remote terminal equipment.

## Description

### Field

This disclosure relates to the field of communication.

### Background

In Release 18 of the 3rd Generation Partnership Project (3GPP), multi-path schemes are studied and supported. A scenario of the multi-path may be: a remote user equipment (UE) is connected to the same network device (e.g. a gNB) by using a direct path and an indirect path. For example, the direct path may be that the remote terminal equipment is connected directly to the network device via a Uu interface, and the indirect path may be that the remote user equipment is connected to the network device via a layer 2 (L2) UE-to-Network relay, such as being connected to the network device via a relay UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that in some multi-path scenarios, it is unable to make a relay terminal equipment in a radio resource control (RRC) idle (RRC_Idle) or RRC inactive (RRC_Inactive) state to enter an RRC connected (RRC_Connected) state.

In order to solve at least one of the above problems or other similar problems, embodiments of this disclosure provide a multi-path communication method and apparatus.

According to one aspect of the embodiments of this disclosure, there is provided a multi-path communication apparatus, configured in a remote terminal equipment, the apparatus including: a receiving unit configured to receive first indication information transmitted by a relay terminal equipment or second indication information transmitted by a network device; and a processing unit configured to trigger or transmit a first PC5-RRC message to the relay terminal equipment according to the first indication information or the second indication information, the first PC5-RRC message being used to bring the relay terminal equipment into a radio resource control connected state.

According to another aspect of the embodiments of this disclosure, there is provided a multi-path communication apparatus, configured in a remote terminal equipment, the apparatus including: a receiving unit configured to receive third indication information transmitted by a relay terminal equipment; and a processing unit configured to not to trigger a first PC5-RRC message, or configured to cancel a first PC5-RRC message, or configured to not to transmit a first PC5-RRC message to the relay terminal equipment, according to the third indication information.

According to a further aspect of the embodiments of this disclosure, there is provided a multi-path communication method, applicable to a remote terminal equipment, the method including: receiving, by the remote terminal equipment, first indication information transmitted by a relay terminal equipment or second indication information transmitted by a network device; and triggering or transmitting a first PC5-RRC message by the remote terminal equipment to the relay terminal equipment according to the first indication information or the second indication information, the first PC5-RRC message being used to bring the relay terminal equipment into a radio resource control connected state.

According to still another aspect of the embodiments of this disclosure, there is provided a multi-path communication method, applicable to a remote terminal equipment, the method including: receiving, by the remote terminal equipment, third indication information transmitted by a relay terminal equipment; and not triggering a first PC5-RRC message, or cancelling a first PC5-RRC message, or not transmitting a first PC5-RRC message to the relay terminal equipment, according to the third indication information.

According to yet another aspect of the embodiments of this disclosure, there is provided a multi-path communication apparatus, configured in a relay terminal equipment, the apparatus including: a transmitting unit configured to transmit first indication information to a remote terminal equipment; and a receiving unit configured to receive a first PC5-RRC message transmitted by the remote terminal equipment, the first PC5-RRC message being used to bring the relay terminal equipment into a radio resource control connected state.

According to yet another aspect of the embodiments of this disclosure, there is provided a multi-path communication apparatus, configured in a relay terminal equipment, the apparatus including: a receiving unit configured to receive a first PC5-RRC message transmitted by a remote terminal equipment; and a processing unit configured to initiate an RRC connection establishment procedure or an RRC resume procedure in a case where the relay terminal equipment is in an RRC idle or RRC inactive state.

According to yet another aspect of the embodiments of this disclosure, there is provided a multi-path communication apparatus, configured in a relay terminal equipment, the method including: transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.

According to yet another aspect of the embodiments of this disclosure, there is provided a multi-path communication method, applicable to a relay terminal equipment, the method including: transmitting first indication information by the relay terminal equipment to a remote terminal equipment; and receiving, by the relay terminal equipment, a first PC5-RRC message transmitted by the remote terminal equipment, the first PC5-RRC message being used to bring the relay terminal equipment into an RRC connected state.

According to yet another aspect of the embodiments of this disclosure, there is provided a multi-path communication method, applicable to a relay terminal equipment, the method including: receiving, by the relay terminal equipment, a first PC5-RRC message transmitted by a remote terminal equipment, and initiating an RRC connection establishment procedure or an RRC resume procedure by the relay terminal equipment in a case where the relay terminal equipment is in an RRC idle or RRC inactive state.

According to yet another aspect of the embodiments of this disclosure, there is provided a multi-path communication method, applicable to a relay terminal equipment, the method including: transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.

According to yet another aspect of the embodiments of this disclosure, there is provided a multi-path communication apparatus, configured in a network device, the apparatus including: a transmitting unit configured to transmit second indication information to a remote terminal equipment, the second indication information being used to make the remote terminal equipment to trigger or transmit first PC5-RRC message to the relay terminal equipment, the first PC5-RRC message being used to bring the relay terminal equipment into an RRC connected state.

According to yet another aspect of the embodiments of this disclosure, there is provided a multi-path communication method, applicable to a network device, the method including: transmitting second indication information by the network device to a remote terminal equipment, the second indication information being used to make the remote terminal equipment to trigger or transmit first PC5-RRC message to the relay terminal equipment, the first PC5-RRC message being used to bring the relay terminal equipment into an RRC connected state.

According to still another aspect of the embodiments of this disclosure, there is provided a remote terminal equipment, including a memory and a processor, the memory storing a computer program, and the processor being configured to execute the computer program to carry out the multi-path communication methods at the remote terminal equipment side described above.

According to still another aspect of the embodiments of this disclosure, there is provided a relay terminal equipment, including a memory and a processor, the memory storing a computer program, and the processor being configured to execute the computer program to carry out the multi-path communication methods at the relay terminal equipment side described above.

According to yet another aspect of the embodiments of this disclosure, there is provided a network device, including a memory and a processor, the memory storing a computer program, and the processor being configured to execute the computer program to carry out the multi-path communication methods at the network device side described above.

According to still another aspect of the embodiments of this disclosure, there is provided a communication system, including the above-described network device and/or the above-described remote terminal equipment and/or the above-described relay terminal equipment.

One of the advantages of the embodiments of this disclosure exists in that the remote terminal equipment receives first indication information transmitted by the relay terminal equipment or second indication information transmitted by the network device, and triggers or transmits a first PC5-RRC message to the relay terminal equipment according to the first indication information or the second indication information, the first PC5-RRC message being used to bring the relay terminal equipment into a radio resource control connected state. Hence, the relay terminal equipment is enabled to provide relay services for the remote terminal equipment.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of an embodiment of this disclosure;
FIG. 2 is a schematic diagram of a multi-path scenario of an embodiment of this disclosure;
FIG. 3 is a schematic diagram of a structure of a multi-path protocol stack of an embodiment of this disclosure;
FIG. 4 is a schematic diagram of a multi-path communication method of an embodiment of this disclosure;
FIGs. 5-7 are schematic diagrams of processes of information exchange of an embodiment of this disclosure;
FIGs. 8-12 are schematic diagrams of multi-path communication methods of embodiments of this disclosure;
FIGs. 13-18 are schematic diagrams of multi-path communication apparatuses of embodiments of this disclosure;
FIG. 19 is a schematic diagram of a structure of a remote terminal equipment of an embodiment of this disclosure;
FIG. 20 is a schematic diagram of a structure of a relay terminal equipment of an embodiment of this disclosure; and
FIG. 21 is a schematic diagram of a structure of a network device of an embodiment of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" in this text may refer to a network device, and may also refer to a terminal equipment.

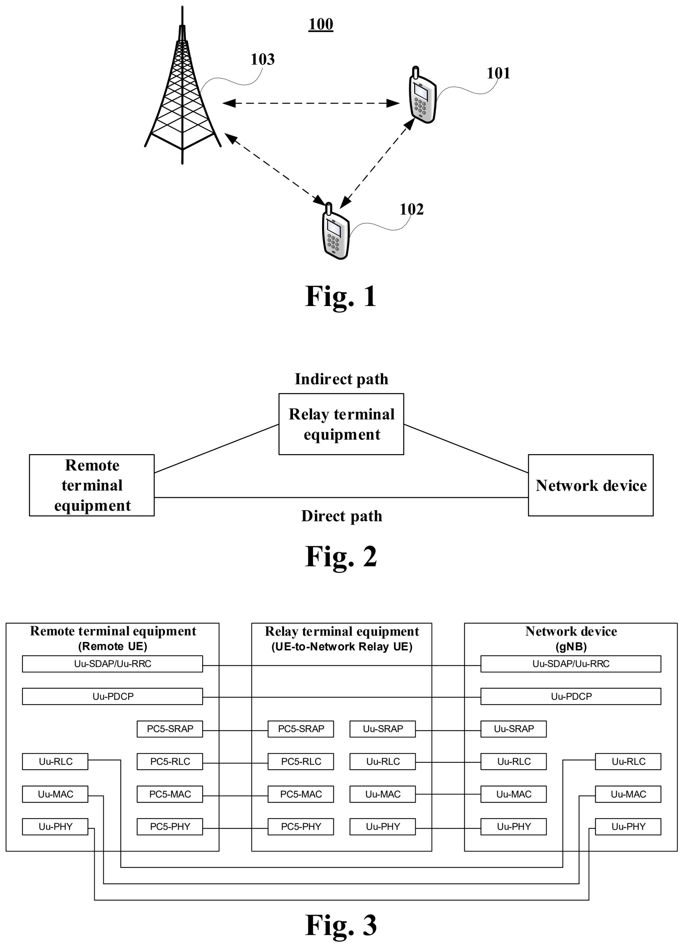

FIG. 1 is a schematic diagram of a communication system of an embodiment of this disclosure, illustrating a case taking a remote terminal equipment, a relay terminal equipment and a network device as an example. As shown in FIG. 1, the communication system 100 may include a remote terminal equipment 101, a relay terminal equipment 102 and a network device 103. The remote terminal equipment 101 is connected to the network device 103 via a direct path and an indirect path. For the sake of simplicity, description is given in FIG. 1 by taking two terminal equipments (one remote terminal equipment and one relay terminal equipment) and one network device as an example; however, the embodiment of this disclosure is not limited thereto.

In the embodiment of this disclosure, existing services or services that may be implemented in the future may be performed between the network device 103 and the remote terminal equipment 101 and the relay terminal equipment 102. For example, such services may include but not limited to an enhanced mobile broadband (eMBB), massive machine type communication (MTC), ultra-reliable and low-latency communication (URLLC), etc.

FIG. 2 is a schematic diagram of a multi-path scenario of the embodiment of this disclosure. As shown in FIG. 2, in the embodiment of this disclosure, the remote terminal equipment may simultaneously communicate with the network device (such as a gNB) via a direct path and an indirect path. For example, the remote terminal equipment may communicate with a network device via a Uu interface (the direct path) and communicate with a network device via the relay terminal equipment (the indirect path).

FIG. 3 is a schematic diagram of a structure of a multi-path protocol stack of the embodiment of this disclosure. As shown in FIG. 3, the direct path between the remote terminal equipment and the network device uses a Uu interface protocol stack, and the indirect path between the remote terminal equipment and the network device is transmitted via L2 UE-to-Network relay, using the PC5 interface and a Uu interface protocol stack.

In some embodiments, as shown in FIG. 3, an RRC layer, a service data adaptation protocol (SDAP) layer and a packet data convergence protocol (PDCP) layer in the remote terminal equipment are equivalent to an RRC layer, an SDAP layer and a PDCP layer in the network device, and data of the PDCP layer of the remote terminal equipment may be transmitted to the network device via the indirect path passing the relay user equipment. For example, a PDCP PDU (protocol data unit) of the remote terminal equipment may be transmitted to the relay UE via a PC5-SRAP (sidelink relay adaptation protocol), a PC5-RLC, a PC5-MAC and a PC5-PHY through a sidelink, and then the relay UE transmits the data to a gNB via its own Uu interface protocol stack (a Uu SRAP, a Uu RLC, a Uu MAC, and a Uu PHY). The gNB side receives the data from a peer Uu interface protocol stack of the relay UE, and transmits the data to the Uu-PDCP of the gNB for processing.

Or, data of the PDCP layer of the remote terminal equipment may be transmitted to the network device via a direct path. For example, the PDCP PDU of the remote terminal equipment may be transmitted to the gNB via a Uu RLC, a Uu MAC, and a Uu PHY. The gNB side receives the data from a peer Uu interface protocol stack of the remote UE, and transmits the data to the Uu-PDCP of the gNB for processing.

In some embodiments, in the direct path and/or the indirect path, there may be one or more RLC (radio link control) entities (Uu RLC entities or PC5 RLC entities) associated with a PDCP entity of a radio bearer.

In some embodiments, as shown in FIG. 3, in the protocol stack of the gNB side, more than one Uu MAC entities may be used to process data of the remote terminal equipment and the relay user equipment; however, this disclosure is not limited thereto, and one Uu MAC entity may be used to process data of the remote terminal equipment and the relay user equipment.

In some embodiments, as shown in FIG. 3, in the protocol stack of the remote terminal equipment, a PC5-MAC entity and a Uu-MAC entity may be used to process data of the indirect path and the direct path; however, this disclosure is not limited thereto, and an MAC entity may also be used to execute operations of PC5-MAC and Uu-MAC.

In some embodiments, as shown in FIG. 3, transmitting via a direct path refers to, for example, that the PDCP layer transmits data to a Uu RLC bearer or channel or entity, and transmitting via an indirect path refers to, for example, that the PDCP layer transmits data to the SRAP entity and then transmits via the RLC bearer or channel or entity of PC5.

In some embodiments, the data may be PDCP SDUs (service data units) or PDCP PDUs or RLC SDUs, etc.

In some embodiments, the gNB connected by the remote terminal equipment via a direct path and the gNB connected via an indirect path are identical gNB. A cell connected by the remote terminal equipment via a direct path and a cell connected via an indirect path are identical cell; or, the cell connected by the remote terminal equipment via a direct path and the cell connected via an indirect path are different cells, wherein the different cells may be intra-frequency cells or inter-frequency cells.

In some embodiments, in the multi-path scenario, the following situations may be supported:
A. The remote UE operating only on the direct path adds the indirect path under the same gNB;
B. The remote UE operating only on the indirect path adds the direct path under the same gNB;
C. The remote UE operating in multi-path releases the indirect path;
D. The remote UE operating in multi-path releases the direct path;
G. The remote UE operating in multi-path changes to a new relay UE for the indirect path while keeping the direct path under the same gNB. FFS if this case would be supported via separate release-and-add (A+C in separate reconfigurations) or a single switch procedure (e.g. similar to i2i service continuity);

Both situation A (adding an indirect path) and situation G (changing an indirect path, such as releasing+adding) involve an operation of adding an indirect path. In some situations, it is possible that the relay terminal equipment of the added indirect path is in an RRC_Idle or RRC_Inactive state.

In a case where the indirect path is configured with a signaling radio bearer (SRB) carrying an RRC reconfiguration complete message, such as in a case where the added indirect path is configured with SRB1 or split SRB1 or duplication SRB1, the RRC reconfiguration complete message may be transmitted via the indirect path. For example, the remote terminal equipment transmits the RRC reconfiguration complete message to the relay terminal equipment; and in a case where the relay terminal equipment is in the RRC_Idle or RRC_Inactive state, the RRC reconfiguration complete message may trigger the relay terminal equipment to enter the RRC_connected state; and after the relay terminal equipment enters the RRC_connected state, it transmits the RRC reconfiguration complete message to the network device.

In a case where the indirect path is not configured with an SRB for carrying the RRC reconfiguration complete message, such as in a case where the added indirect path is not configured with SRB1 or split SRB1 or duplication SRB1, the RRC reconfiguration complete message may only be transmitted to the gNB via a direct path. Therefore, it is not possible to trigger the relay UE to enter the RRC_Connected state by the RRC reconfiguration complete message.

Implementations of the embodiments of this disclosure shall be described below with reference to the accompanying drawings. These implementations are illustrative only, and are not intended to limit this disclosure.

### Embodiment of a first aspect

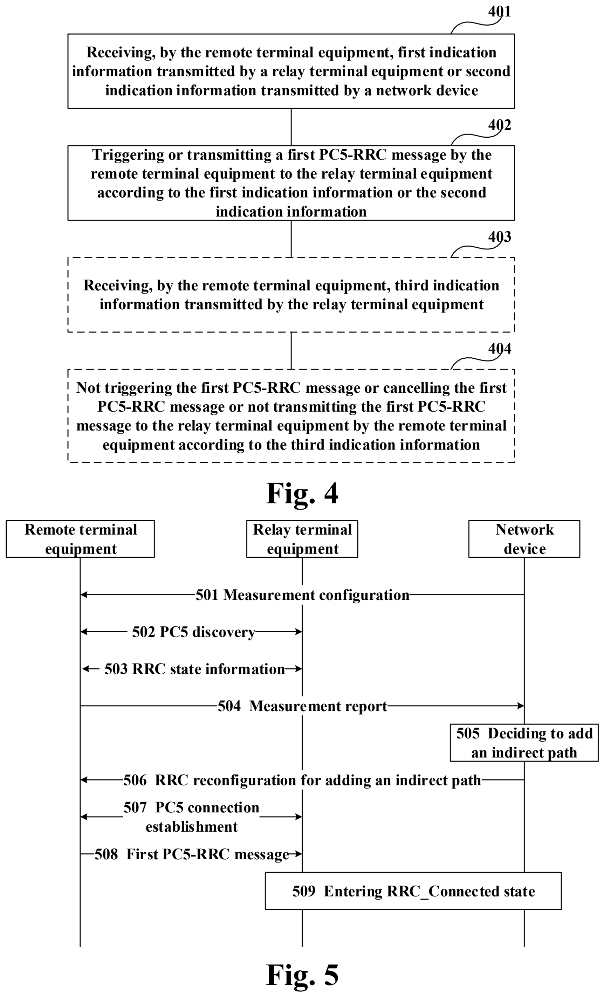

The embodiment of this disclosure provides a multi-path communication method, applicable to a remote terminal equipment. FIG. 4 is a schematic diagram of the multi-path communication method of the embodiment of this disclosure. As shown in FIG. 4, the method includes:
401: receiving, by the remote terminal equipment, first indication information transmitted by a relay terminal equipment or second indication information transmitted by a network device; and
402: triggering or transmitting a first PC5-RRC message by the remote terminal equipment to the relay terminal equipment according to the first indication information or the second indication information, the first PC5-RRC message being used to bring the relay terminal equipment into a radio resource control connected state.

It should be noted that FIG. 4 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 4.

According to the above embodiment, the remote terminal equipment receives first indication information transmitted by the relay terminal equipment or second indication information transmitted by the network device, and triggers or transmits a first PC5-RRC message to the relay terminal equipment according to the first indication information or the second indication information, the first PC5-RRC message being used to bring the relay terminal equipment into a radio resource control connected state. Hence, the relay terminal equipment is enabled to provide relay services for the remote terminal equipment, which is helpful to successfully adding or changing an indirect path.

In the above embodiment, 'the relay UE enters the RRC_Connected state' may be equivalently replaced with 'the relay UE initiates an RRC connection establishment procedure or RRC resume procedure', or 'the relay UE serves as a relay'.

In some embodiments, the first indication information may include at least one of the following: RRC state information of the relay terminal equipment; or first information causing the remote terminal equipment to trigger or transmit the first PC5-RRC message. Thus, the remote terminal equipment may decide whether to trigger the first PC5-RRC message or transmit the first PC5-RRC message to the relay terminal equipment according to the RRC state information of the relay terminal equipment and/or the first information. In other words, the remote terminal equipment is able to trigger or not trigger the first PC5-RRC message according to the RRC state information of the relay terminal equipment and/or the first information, or transmit or not transmit the first PC5-RRC message to the relay terminal equipment. Thus, unnecessary signaling and processes may be avoided, signaling overhead is relatively small, and the method is simple and easy to implement.

For example, in a case where the RRC state information indicates that the relay terminal equipment is in the RRC idle or RRC inactive state, the remote terminal equipment may trigger or transmit the first PC5-RRC message to the relay terminal equipment; or, in a case where the RRC state information indicates that the relay terminal equipment is not in the RRC idle or RRC inactive state, the remote terminal equipment may not trigger or transmit the first PC5-RRC message to the relay terminal equipment; or, in a case where the RRC state information indicates that the relay terminal equipment is in the RRC connected state, the remote terminal equipment may not trigger or transmit the first PC5-RRC message to the relay terminal equipment; or, in the case where the RRC state information indicates that the relay terminal equipment is not in the RRC connected state, the remote terminal equipment may trigger or transmit the first PC5-RRC message to the relay terminal equipment.

For another example, in the case where the first information causing the remote terminal equipment to trigger or transmit the first PC5-RRC message indicates that the remote terminal equipment triggers or transmits the first PC5-RRC message, the remote terminal equipment triggers or transmits the first PC5-RRC message to the relay terminal equipment; or, in the case where the first information causing the remote terminal equipment to trigger or transmit the first PC5-RRC message indicates that the remote terminal equipment does not trigger or does not transmit the first PC5-RRC message, the remote terminal equipment does not trigger or does not transmit the first PC5-RRC message to the relay terminal equipment.

In some embodiments, the RRC state information in the first indication information may include at least one of the following: information on the RRC state of the relay terminal equipment; information on whether the relay terminal equipment is in the RRC connected state; or information on whether the relay terminal equipment is in the RRC idle or RRC inactive state.

In some embodiments, the RRC state information in the first indication information is RRC state information of a Uu interface of the relay terminal equipment.

In some embodiments, the information on the RRC state of the relay terminal equipment may include, for example, RRC_Idle or RRC_Inactive, or RRC_Connected. Thus, it is possible to notify the remote terminal equipment of a current specific RRC state of the relay terminal equipment.

In some embodiments, the information on whether the relay terminal equipment is in the RRC connected state may indicate that the relay terminal equipment is in the RRC_Connected state or that the relay terminal equipment is not in the RRC_Connected state. Thus, it is possible to indicate the RRC state of the relay terminal equipment with fewer bits, for example, the information on whether the relay terminal equipment is in the RRC connected state may be 1 bit.

In some embodiments, the information on whether the relay terminal equipment is in an RRC idle or RRC inactive state may indicate that the relay terminal equipment is in the RRC_Idle or RRC_Inactive state, or that the relay terminal equipment is not in the RRC_Idle or RRC_Inactive state. Thus, it is possible to indicate the RRC state of the relay terminal equipment with fewer bits, for example, the information on whether the relay terminal equipment is in the RRC idle or RRC inactive state may be 1 bit.

In some embodiments, the first information in the first indication information causing the remote terminal equipment to trigger or transmit the first PC5-RRC message may be 1 bit. For example, when the 1 bit is 1, it indicates that the remote terminal equipment triggers or transmits the first PC5-RRC message; and when the 1 bit is 0, it indicates that the remote terminal equipment does not trigger or transmit the first PC5-RRC message. However, this disclosure is not limited thereto, and the first information in the first indication information causing the remote terminal equipment to trigger or transmit the first PC5-RRC message may be optional. For example, when the first message is present, it indicates that the remote terminal equipment triggers or transmits the first PC5-RRC message; and when the first information is default, it indicates that the remote terminal equipment does not trigger or transmit the first PC5-RRC message.

In some embodiments, in the case where the relay terminal equipment is in the RRC_Idle or RRC_Inactive state, the first information may be a value indicating that the remote terminal equipment triggers or transmits the first PC5-RRC message; and in the case where the relay terminal equipment is in the RRC_Connected state, the first information may be a value indicating that the remote terminal equipment does not trigger or transmit the first PC5-RRC message.

In some embodiments, the remote terminal equipment may receive the first indication information at various times. For example, the remote terminal equipment may receive the first indication information during a PC5 discovery procedure, or receive the first indication information after the PC5 discovery procedure; and/or, the remote terminal equipment may receive the first indication information during a PC5 connection establishment procedure with the relay terminal equipment, or receive the first indication information after the PC5 connection establishment procedure with the relay terminal equipment.

Occasions (or times) when the remote terminal equipment receives the first indication information (or the relay terminal equipment transmits the first indication information) shall be exemplified below by taking the scenario of adding an indirect path and that the first indication information is the RRC state information of the relay terminal equipment as examples. It should be understood that the following contents are also applicable to a scenario of changing an indirect path and a case where the first indication information is other information.

FIG. 5 is a schematic diagram of a process of information exchange of the embodiment of this disclosure. As shown in FIG. 5, the network device transmits a measurement configuration to the remote terminal equipment (501), and the remote terminal equipment initiates a PC5 discovery procedure according to the measurement configuration (502).

During the PC5 discovery procedure, the relay terminal equipment may transmit the RRC state information to the remote terminal equipment (which may also be described as that the remote terminal equipment receives the RRC state information transmitted by the relay terminal equipment) (503). That is, the step of transmitting the RRC state information by the relay terminal equipment to the remote terminal equipment may be incorporated into the PC5 discovery procedure. For example, the relay terminal equipment may add the RRC state information of the relay terminal equipment into original steps of the PC5 discovery procedure. Therefore, the RRC state information of the relay terminal equipment may be transmitted in the original steps of the PC5 discovery procedure, which is relatively good in compatibility. However, this disclosure is not limited thereto, and the step of transmitting the RRC state information by the relay terminal equipment to the remote terminal equipment may also be a separate step, wherein the separate step may be a newly-added step in the PC5 discovery procedure, or it may be a step outside of the PC5 discovery procedure.

The remote terminal equipment transmits a measurement report to the network device (504), and the network device decides whether to add an indirect path according to the measurement report (505). If the network device decides to add an indirect path, it transmits an RRC reconfiguration message for adding an indirect path to the remote terminal equipment (506). Wherein, in the scenario of changing an indirect path, in 505, the network device decides whether to change an indirect path according to the measurement report of the remote terminal equipment; and in 506, the network device transmits the RRC reconfiguration message for changing an indirect path to the remote terminal equipment.

The remote terminal equipment establishes PC5 connection with the relay terminal equipment according to the RRC reconfiguration message (507). The remote terminal equipment transmits the first PC5-RRC message to the relay terminal equipment according to the RRC state information received in 503 (508). For example, when the relay terminal equipment is not in the RRC connected state, the remote terminal equipment transmits the first PC5-RRC message to the relay terminal equipment. The relay terminal equipment initiates a relevant process to enter the RRC_Connected state according to the first PC5-RRC message (509).

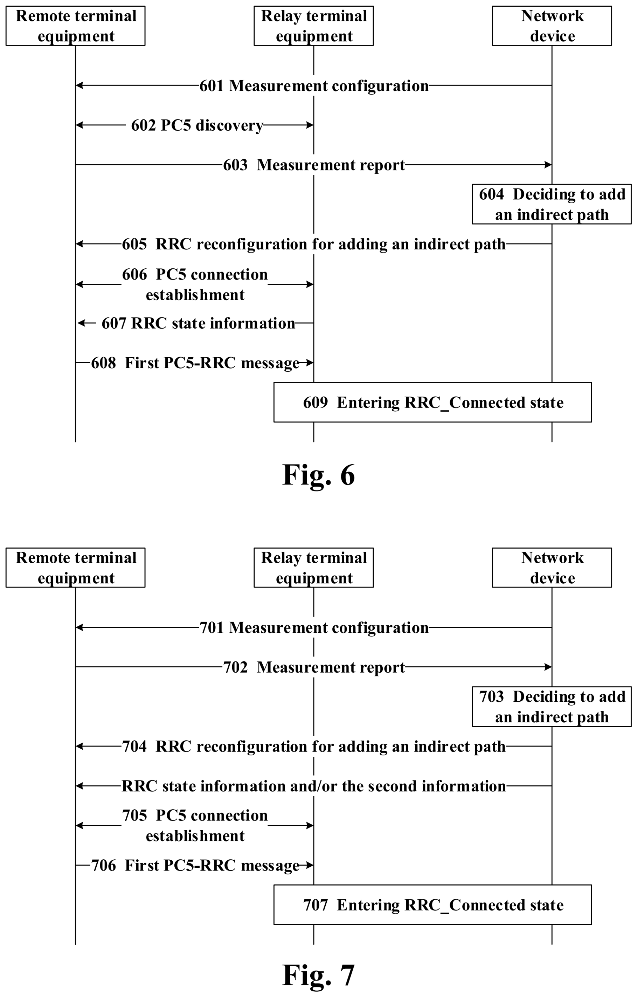

FIG. 6 is another schematic diagram of the process of information exchange of the embodiment of this disclosure. Wherein, 601-606 and 608-609 in FIG. 6 are similar or identical to 501-502 and 504-509 in FIG. 5, with an exception of a time of transmitting the RRC state information of the relay terminal equipment. As shown in FIG. 6, during the PC5 connection establishment procedure by the remote terminal equipment with the relay terminal equipment, the relay terminal equipment transmits the RRC state information to the remote terminal equipment (607). That is, the step of transmitting the RRC state information by the relay terminal equipment to the remote terminal equipment may be incorporated into the PC5 connection establishment procedure. For example, the relay terminal equipment may add the RRC state information of the relay terminal equipment to original steps of the PC5 connection establishment procedure. Therefore, the RRC state information of the relay terminal equipment may be transmitted in the original steps of the PC5 discovery procedure, which is relatively good in compatibility. However, this disclosure is not limited thereto, and the step of transmitting the RRC state information by the relay terminal equipment to the remote terminal equipment may also be a separate step, wherein the separate step may be a newly-added step in the PC5 connection establishment procedure, or it may be a step outside of the PC5 connection establishment procedure.

It should be noted that FIGs. 5 and 6 only schematically illustrate the embodiment of this disclosure; however, this disclosure is not limited thereto. For example, an order of execution of the steps may be appropriately adjusted, and furthermore, some other steps may be added, or some steps therein may be reduced, without being limited to what is contained in FIGs. 5 and 6.

In some embodiments, the remote terminal equipment may receive the first indication information before receiving the measurement configuration information transmitted by the network device. For example, the remote terminal equipment may discover the relay terminal equipment before receiving the measurement configuration, in which case the PC5 discovery procedure may be executed before the remote terminal equipment receives the measurement configuration. Or, the remote terminal equipment may establish PC5 connection with the relay terminal equipment before receiving the measurement configuration, in which case the PC5 connection establishment procedure may be executed before the remote terminal equipment receives the measurement configuration and after the PC5 discovery procedure. In the above situation, the remote terminal equipment may receive the first indication information before receiving the measurement configuration information transmitted by the network device. However, this disclosure is not limited thereto, and the remote terminal equipment may also receive the first indication information after receiving the measurement configuration information transmitted by the network device.

In some embodiments, the remote terminal equipment may receive the first indication information before transmitting the measurement report to the network device. For example, the remote terminal equipment may establish PC5 connection with the relay terminal equipment before transmitting the measurement report to the network device, in which case the PC5 connection establishment procedure may be executed before the remote terminal equipment transmits the measurement report to the network device and after the PC5 discovery procedure. In the above situation, the remote terminal equipment may receive the first indication information before transmitting the measurement report to the network device. However, this disclosure is not limited thereto, and the remote terminal equipment may also receive the first indication information after transmitting the measurement report to the network device.

In some embodiments, the remote terminal equipment may receive the first indication information before receiving the RRC reconfiguration message for adding or changing an indirect path transmitted by the network device. For example, the remote terminal equipment may establish PC5 connection with the relay terminal equipment before receiving the RRC reconfiguration message for adding or changing an indirect path transmitted by the network device. In this case, the PC5 connection establishment procedure may be performed before receiving the RRC reconfiguration message for adding or changing an indirect path transmitted by the network device and after the PC5 discovery procedure. In the above situation, the remote terminal equipment may receive the first indication information before receiving the RRC reconfiguration message for adding or changing an indirect path transmitted by the network device. However, this disclosure is not limited thereto, and the remote terminal equipment may also receive the first indication information after receiving the RRC reconfiguration message for adding or changing an indirect path transmitted by the network device.

In some embodiments, the first indication information may be included in various messages transmitted by the relay terminal equipment to the remote terminal equipment.

For example, the first indication information may be included in a PC5-S message and/or a second PC5-RRC message and/or an MAC CE (media access control element) transmitted by the relay terminal equipment to the remote terminal equipment, wherein the PC5-S message may include at least one of the following: a direct communication request; or a direct communication response; however, this disclosure is not limited thereto, and the PC5-S message may also include other messages.

The second PC5-RRC message may include at least one of the following: an RRC reconfiguration sidelink (RRCReconfigurationSidelink), an RRC reconfiguration complete sidelink (RRCReconfigurationCompleteSidelink), a UE assistance information sidelink (UEAssistanceInformationSidelink), or a notification message sidelink (NotificationMessageSidelink); however, this disclosure is not limited thereto, and the PC5-RRC message may also include other messages.

The MAC CE may be a new MAC CE, for example, a new logical channel identifier (LCID) may be used to denote the first indication information, and the MAC CE may be 0 bytes, or a new LCID and a 1-byte MAC CE may be used, and the MAC CE includes the first indication information, and so on. However, this disclosure is not limited thereto, and the MAC CE may also include an existing MAC CE, such as indicating the first indication information by reserved bits (R) in a sidelink CSI reporting MAC CE.

For another example, the first indication information may be included in a discovery-related message (discovery message) transmitted by the relay terminal equipment to the remote terminal equipment. The discovery-related message may include at least one of the following: a discovery solicitation, or a discovery response.

In some embodiments, the second indication information transmitted by the network device to the remote terminal equipment may include at least one of the following: RRC state information of the relay terminal equipment, second information causing the remote terminal equipment to trigger or transmit the first PC5-RRC message, or an RRC reconfiguration message for adding or changing an indirect path.

In some embodiments, the RRC state information includes at least one of the following: information on the RRC state of the relay terminal equipment; information on whether the relay terminal equipment is in the RRC connected state; or information on whether the relay terminal equipment is in the RRC idle or RRC inactive state.

Wherein, reference may be made to description related to the RRC state information of the relay terminal equipment in the first indication information transmitted by the relay terminal equipment to the remote terminal equipment for description related to the RRC state information of the relay terminal equipment in the second indication information; and reference may be made to description related to the first information in the first indication information transmitted by the relay terminal equipment to the remote terminal equipment for description related to the second information, contents thereof being incorporated herein, which shall not be described herein any further.

In some embodiments, according to the RRC state information of the relay terminal equipment transmitted by the network device and/or the second information indicating that the remote terminal equipment triggers or transmits the first PC5-RRC message, the remote terminal equipment may decide whether to trigger or transmit the first PC5-RRC message. For example, in the case where the RRC state information indicates that the relay terminal equipment is in the RRC idle or RRC inactive state, the remote terminal equipment triggers or transmits the first PC5-RRC message to the relay terminal equipment; or, in the case where the RRC state information indicates that the relay terminal equipment is not in the RRC idle or RRC inactive state, the remote terminal equipment may not trigger or transmit the first PC5-RRC message to the relay terminal equipment; or, in the case where the RRC state information indicates that the relay terminal equipment is in the RRC connected state, the remote terminal equipment may not trigger or transmit the first PC5-RRC message to the relay terminal equipment; or, in the case where the RRC state information indicates that the relay terminal equipment is not in the RRC connected state, the remote terminal equipment may trigger or transmit the first PC5-RRC message to the relay terminal equipment; or, in the case where the second information causing the remote terminal equipment to trigger or transmit the first PC5-RRC message indicates that the remote terminal equipment triggers or transmits the first PC5-RRC message, the remote terminal equipment triggers or transmits the first PC5-RRC message to the relay terminal equipment; or, in the case where the second information causing the remote terminal equipment to trigger or transmit the first PC5-RRC message indicates that the remote terminal equipment does not trigger or transmit the first PC5-RRC message, the remote terminal equipment does not trigger or transmit the first PC5-RRC message to the relay terminal equipment.

In some embodiments, the remote terminal equipment may always trigger or transmit the first PC5-RRC message to the relay terminal equipment without taking the RRC state information of the relay terminal equipment into account. For example, after receiving the RRC reconfiguration message for adding or changing an indirect path transmitted by the network device, the remote terminal equipment triggers or transmits the first PC5-RRC message to the relay terminal equipment. Therefore, the remote terminal equipment does not need to obtain the RRC state information of the relay terminal equipment or receive the second information transmitted by the network device, and the method is simple.

In this embodiment, at the relay terminal equipment side, after receiving the first PC5-RRC message, the relay terminal equipment may decide whether to initiate a relevant process to enter the RRC_Connected state according to current RRC state of its own. For example, if the relay terminal equipment is in the RRC_Connected state, the relay terminal equipment ignores the first PC5-RRC message; and if the relay terminal equipment is in the RRC_Idle or RRC_Inactive state, it initiates an RRC connection establishment procedure or an RRC resume procedure.

In some embodiments, after receiving the RRC reconfiguration message for adding or changing an indirect path transmitted by the network device, the remote terminal equipment may also determine whether to trigger or transmit the first PC5-RRC message to the relay terminal equipment according to whether the RRC reconfiguration complete message will be transmitted to the network device via a direct path. For example, if the RRC reconfiguration complete message is to be transmitted to the network device via a direct path, the first PC5-RRC message is triggered or transmitted to the relay terminal equipment; or, if the RRC reconfiguration complete message is to be transmitted to the network device via an indirect path, the first PC5-RRC message is not triggered or transmitted to the relay terminal equipment.

In some embodiments, the second indication information may be received via a direct path. For example, the RRC state information of the relay terminal equipment in the second indication information and/or the second information causing the remote terminal equipment to trigger or transmit the first PC5-RRC message may be included in at least one of the following: an RRC message; a PDCP control PDU; an RLC control PDU; an MAC CE; or downlink control information (DCI).

Wherein, in the case where the network device transmits the RRC state information of the relay terminal equipment and/or the second information via the RRC message, the RRC message may be an RRC reconfiguration message for adding or changing an indirect path, such as adding a new IE (information element) to the RRC reconfiguration message for adding or changing an indirect path to denote the RRC state information and/or the second information, etc. However, this disclosure is not limited thereto, and the RRC message may also be other messages, such as a measurement configuration, etc.; or, the RRC state information of the relay terminal equipment and/or the second information may also be transmitted by other means.

Times of the remote terminal equipment in receiving the second indication information (or the network devices in transmitting the second indication information) shall be exemplified below by taking the scenario of adding an indirect path and that the second indication information is the RRC state information of the relay terminal equipment and/or the second information as examples. It should be understood that the following contents are also applicable to a scenario of changing an indirect path.

FIG. 7 is a further schematic diagram of the process of information exchange of the embodiment of this disclosure. As shown in FIG. 7, the network device transmits a measurement configuration to the remote terminal equipment (701), and the remote terminal equipment transmits a measurement report to the network device (702). The network device decides whether to add an indirect path according to the measurement report (703). If the network device decides to add an indirect path, it transmits the RRC reconfiguration message for adding an indirect path to the remote terminal equipment (704). Wherein, the RRC state information of the relay terminal equipment and/or the second information in the second indication information may be included in the RRC reconfiguration message for adding an indirect path.

In the scenario of changing an indirect path, in 703, the network device decides whether to change an indirect path according to the measurement report of the remote terminal equipment; and in 704, the network device transmits the RRC reconfiguration message for changing an indirect path to the remote terminal equipment. The RRC state information of the relay terminal equipment and/or the second information in the second indication information may be included in the RRC reconfiguration message for changing an indirect path.

The remote terminal equipment establishes PC5 connection with the relay terminal equipment according to the RRC reconfiguration message (705). The remote terminal equipment transmits the first PC5-RRC message to the relay terminal equipment according to the RRC state information and/or the second information received in 704

(706). For example, when the relay terminal equipment is not in the RRC connected state, the remote terminal equipment transmits the first PC5-RRC message to the relay terminal equipment. The relay terminal equipment initiates a relevant process to enter the RRC_Connected state according to the first PC5-RRC message (707).

It should be noted that FIG. 7 only schematically illustrates the embodiment of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 7.

In some embodiments, as shown in FIG. 4, the multi-path communication method may further include:
403: receiving, by the remote terminal equipment, third indication information transmitted by the relay terminal equipment; and
404: not triggering the first PC5-RRC message or cancelling the first PC5-RRC message or not transmitting the first PC5-RRC message to the relay terminal equipment by the remote terminal equipment according to the third indication information.

In the above embodiment, the remote terminal equipment receives the third indication information transmitted by the relay terminal equipment, and does not trigger the first PC5-RRC message or cancels the first PC5-RRC message or does not transmit the first PC5-RRC message to the relay terminal equipment according to the third indication information, thereby saving signaling overhead, and avoiding executing unnecessary operations by the remote terminal equipment and/or the relay terminal equipment.

For example, between the time when the remote terminal equipment receives the measurement configuration transmitted by the network device and the time when the remote terminal equipment establishes PC5 connection with the relay terminal equipment, the relay terminal equipment may possibly change a serving cell or a serving base station, while the network device to which the remote terminal equipment is connected via a direct path may possibly not learn the above change of the relay terminal equipment. As a serving cell (or serving base station) of the relay terminal equipment and a serving cell (or serving base station) to which the remote terminal equipment is connected via a direct path may possibly be different, the remote terminal equipment may not trigger the first PC5-RRC message or may cancel the first PC5-RRC message or may not transmit the first PC5-RRC message to the relay terminal equipment.

In some embodiments, the third indication information may include at least one of the following: information on a first serving cell or a first serving base station of the relay terminal equipment; information on that the relay terminal equipment changes a serving cell or a serving base station; information on that the first serving cell of the relay terminal equipment is different from the second serving cell to which the remote terminal equipment is connected via a direct path; or information on that the first serving base station of the relay terminal equipment is different from the second serving base station to which the remote terminal equipment is connected via a direct path.

In some embodiments, the information on that the relay terminal equipment changes a serving cell or a serving base station may include information on that the relay terminal equipment performs cell selection or cell reselection or handover.

In some embodiments, in 404, in a case where the third indication information indicates that a first serving cell of the relay terminal equipment is different from a second serving cell to which the remote terminal equipment is connected via a direct path, or in a case where the third indication information indicates that a first serving base station of the relay terminal equipment is different from a second serving base station to which the remote terminal equipment is connected via a direct path, the remote terminal equipment does not trigger the first PC5-RRC message or cancels the first PC5-RRC message or does not transmit the first PC5-RRC message to the relay terminal equipment.

In some embodiments, reference may be made to the time and/or method for transmitting the first indication information for a time and/or method for transmitting the third indication information.

For example, the remote terminal equipment may receive the third indication information at various times. For example, transmitting the third indication information by the relay terminal equipment to the remote terminal equipment may be incorporated into the PC5 discovery procedure or the PC5 connection establishment procedure, or transmitting the third indication information by the relay terminal equipment to the remote terminal equipment may be a separate step.

For example, the third indication information may be included in various messages transmitted by the relay terminal equipment to the remote terminal equipment. For example, the third indication information may be included in the discovery-related message (discovery message) or the second PC5-RRC message transmitted by the relay terminal equipment to the remote terminal equipment.

The discovery-related message may include at least one of the following: a discovery solicitation, or a discovery response. In a case where the discovery-related message indicates that the serving cell (or serving base station) of the relay terminal equipment is different from a previous serving cell (or serving base station) of the relay terminal equipment (for example, a current serving cell (or serving base station) of the relay terminal equipment is different from a serving cell (or serving base station) of the relay terminal equipment in the measurement configuration), the remote terminal equipment recognizes that the relay terminal equipment has changed a serving cell (or serving base station).

The second PC5-RRC message may include at least one of the following: RRCReconfigurationSidelink; RRCReconfigurationCompleteSidelink; UEAssistanceInformationSidelink; or NotificationMessageSidelink. In a case where the second PC5-RRC message indicates that the relay terminal equipment has performed cell selection or cell reselection, the remote terminal equipment recognizes that the relay terminal equipment has changed a serving cell (or serving base station).

In some embodiments, the first PC5-RRC message may include PC5-RRC trigger. The PC5-RRC trigger may be used to trigger the relay terminal equipment to enter the RRC connected state.

In some embodiments, the first PC5-RRC message may be a kind of RRC message of PC5 interfaces. For example, the first PC5-RRC message may be a new PC5-RRC message. For example, if the remote terminal equipment transmits the new PC5-RRC message, it indicates that the relay terminal equipment needs to enter the RRC_Connected state. For another example, the first PC5-RRC message may be an existing PC5-RRC message. For example, the first PC5-RRC message may include at least one of the following: a remote UE information sidelink (RemoteUEInformationSidelink), an RRC reconfiguration sidelink (RRCReconfigurationSidelink), an RRC reconfiguration complete sidelink (RRCReconfigurationCompleteSidelink), or a UE assistance information sidelink (UEAssistanceInformationSidelink).

For a further example, the PC5-RRC trigger may be included as a new IE in a new PC5-RRC message or an existing PC5-RRC message, wherein the IE may be 1 bit. For example, when the bit is 1, it indicates that the relay terminal equipment needs to enter the RRC_Connected state; and when the bit is 0, it indicates that the relay terminal equipment does not need to enter the RRC_Connected state. Or, the IE may be optional. When the IE is present, it indicates that the relay terminal equipment needs to enter the RRC_Connected state; and when IE is not present, it indicates that the relay terminal equipment does not need to enter the RRC_Connected state.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the steps related to this disclosure are described above; however, this disclosure is not limited thereto, and the method for transmitting failure information may further include other steps, and reference may be made to relevant techniques for contents of these steps.

It can be seen from the above embodiment that the remote terminal equipment receives the first indication information transmitted by the relay terminal equipment or the second indication information transmitted by the network device, and triggers or transmits the first PC5-RRC message to the relay terminal equipment according to the first indication information or the second indication information. Thus, the relay terminal equipment may be caused to enter the RRC connected state. Hence, the relay terminal equipment is enabled to provide relay services for the remote terminal equipment, which is helpful to successfully adding or changing an indirect path.

### Embodiment of a second aspect

The embodiment of this disclosure provides a multi-path communication method, applicable to a remote terminal equipment side, with contents identical to those in the embodiment of the first aspect being not going to be described herein any further. The embodiment of the second aspect may be implemented separately, or, the embodiment of the second aspect may be implemented in combination with the embodiment of the first aspect.

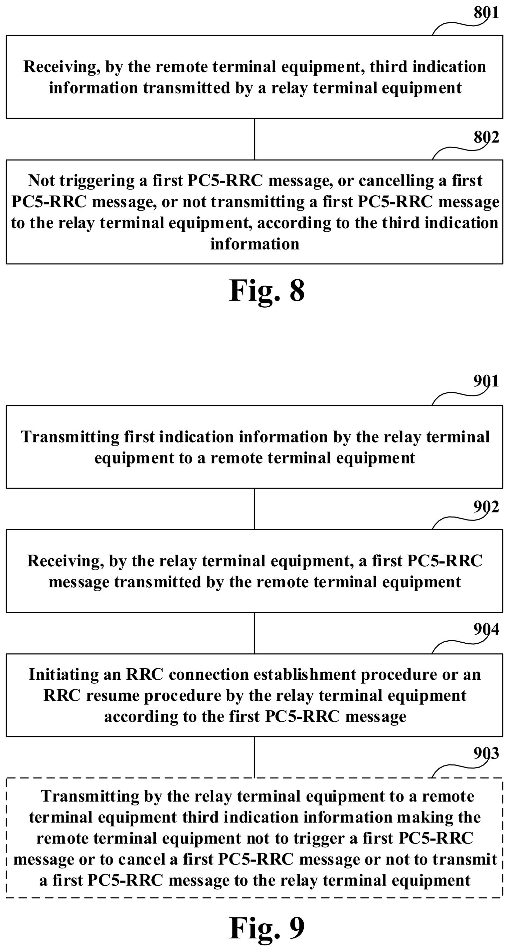

FIG. 8 is a schematic diagram of the multi-path communication method of the embodiment of this disclosure. As shown in FIG. 8, the method includes:
801: receiving, by the remote terminal equipment, third indication information transmitted by a relay terminal equipment; and
802: not triggering a first PC5-RRC message, or cancelling a first PC5-RRC message, or not transmitting a first PC5-RRC message to the relay terminal equipment, according to the third indication information.

It should be noted that FIG. 8 only schematically illustrates the embodiment of this disclosure; however, this disclosure is not limited thereto. For example, an order of execution of the steps may be appropriately adjusted, and furthermore, some other steps may be added, or some steps therein may be reduced, without being limited to what is contained in FIG. 8.

In the above embodiment, the remote terminal equipment receives the third indication information transmitted by the relay terminal equipment, and does not trigger the first PC5-RRC message or cancels the first PC5-RRC message or does not transmit the first PC5-RRC message to the relay terminal equipment according to the third indication information, thereby saving signaling overhead, and avoiding executing unnecessary operations by the remote terminal equipment and/or the relay terminal equipment.

For example, between the time when the remote terminal equipment receives the measurement configuration transmitted by the network device and the time when the remote terminal equipment establishes PC5 connection with the relay terminal equipment, the relay terminal equipment may possibly change a serving cell or a serving base station, while the network device to which the remote terminal equipment is connected via a direct path may possibly not learn the change of the relay terminal equipment. As a serving cell (or serving base station) of the relay terminal equipment and a serving cell (or serving base station) to which the remote terminal equipment is connected via a direct path may possibly be different, the remote terminal equipment may not trigger the first PC5-RRC message or may cancel the first PC5-RRC message or may not transmit the first PC5-RRC message to the relay terminal equipment.

In some embodiments, the third indication information may include at least one of the following: information on a first serving cell or a first serving base station of the relay terminal equipment; information on that the relay terminal equipment changes a serving cell or a serving base station; information on that the first serving cell of the relay terminal equipment is different from the second serving cell to which the remote terminal equipment is connected via a direct path; or information on that the first serving base station of the relay terminal equipment is different from the second serving base station to which the remote terminal equipment is connected via a direct path.

In some embodiments, the information on that the relay terminal equipment changes a serving cell or a serving base station may include information on that the relay terminal equipment performs cell selection or cell reselection or handover.

In some embodiments, in 802, in a case where the third indication information indicates that a first serving cell of the relay terminal equipment is different from a second serving cell to which the remote terminal equipment is connected via a direct path, or in a case where the third indication information indicates that a first serving base station of the relay terminal equipment is different from a second serving base station to which the remote terminal equipment is connected via a direct path, the remote terminal equipment does not trigger the first PC5-RRC message or cancels the first PC5-RRC message or does not transmit the first PC5-RRC message to the relay terminal equipment.

In some embodiments, reference may be made to the time and/or method for transmitting the third indication information in the embodiment of the first aspect for a time and/or method for transmitting the third indication information.

For example, the remote terminal equipment may receive the third indication information at various times. For example, transmitting the third indication information by the relay terminal equipment to the remote terminal equipment may be incorporated into the PC5 discovery procedure or the PC5 connection establishment procedure, or transmitting the third indication information by the relay terminal equipment to the remote terminal equipment may be a separate step.

For example, the third indication information may be included in various messages transmitted by the relay terminal equipment to the remote terminal equipment. For example, the third indication information may be included in the discovery-related message (discovery message) or the second PC5-RRC message transmitted by the relay terminal equipment to the remote terminal equipment.

The discovery-related message may include at least one of the following: a discovery solicitation, or a discovery response. In a case where the discovery-related message indicates that the serving cell (or serving base station) of the relay terminal equipment is different from a previous serving cell (or serving base station) of the relay terminal equipment (for example, a current serving cell (or serving base station) of the relay terminal equipment is different from a serving cell (or serving base station) of the relay terminal equipment in the measurement configuration), the remote terminal equipment recognizes that the relay terminal equipment has changed a serving cell (or serving base station).

The second PC5-RRC message may include at least one of the following: RRCReconfigurationSidelink; RRCReconfigurationCompleteSidelink; UEAssistanceInformationSidelink; or NotificationMessageSidelink. In a case where the second PC5-RRC message indicates that the relay terminal equipment has performed cell selection or cell reselection, the remote terminal equipment recognizes that the relay terminal equipment has changed a serving cell (or serving base station).

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It can be seen from the above embodiment that the remote terminal equipment receives the third indication information transmitted by the relay terminal equipment, and does not trigger the first PC5-RRC message or cancels the first PC5-RRC message or does not transmit the first PC5-RRC message to the relay terminal equipment according to the third indication information, thereby saving signaling overhead, and avoiding executing unnecessary operations by the remote terminal equipment and/or the relay terminal equipment.

### Embodiment of a third aspect

The embodiment of this disclosure provides a multi-path communication method, applicable to a relay terminal equipment side, with contents identical to those in the embodiment of the first aspect being not going to be described herein any further.

FIG. 9 is a schematic diagram of the multi-path communication method of the embodiment of this disclosure. As shown in FIG. 9, the method includes:
901: transmitting first indication information by the relay terminal equipment to a remote terminal equipment; and
902: receiving, by the relay terminal equipment, a first PC5-RRC message transmitted by the remote terminal equipment, the first PC5-RRC message being used to bring the relay terminal equipment into an RRC connected state.

It should be noted that FIG. 9 only schematically illustrates the embodiment of this disclosure; however, this disclosure is not limited thereto. For example, an order of execution of the steps may be appropriately adjusted, and furthermore, some other steps may be added, or some steps therein may be reduced, without being limited to what is contained in FIG. 9.

According to the above embodiment, the relay terminal equipment transmits the first indication information to the remote terminal equipment and receives the first PC5-RRC message used to bring the relay terminal equipment into an RRC connected state transmitted by the remote terminal equipment. Thus, the relay terminal equipment may enter the RRC connection state according to the first PC5-RRC message, thereby providing relay services to the remote terminal equipment, which helpful to successfully adding or changing an indirect path.

In some embodiments, the first indication information may include at least one of the following: RRC state information of the relay terminal equipment; or first information causing the remote terminal equipment to trigger or transmit the first PC5-RRC message.

In some embodiments, the RRC state information may include at least one of the following: information on the RRC state of the relay terminal equipment; information on whether the relay terminal equipment is in the RRC connected state; or information on whether the relay terminal equipment is in the RRC idle or RRC inactive state.

In some embodiments, the RRC state information of the relay terminal equipment may include, for example, RRC_Idle or RRC_Inactive or RRC_Connected, etc. Thus, it is possible to notify the remote terminal equipment of a current specific RRC state of the relay terminal equipment.

In some embodiments, the information on whether the relay terminal equipment is in the RRC connected state may indicate that the relay terminal equipment is in the RRC_Connected state or that the relay terminal equipment is not in the RRC_Connected state. Thus, it is possible to indicate the RRC state of the relay terminal equipment with fewer bits, for example, the information on whether the relay terminal equipment is in the RRC connected state may be 1 bit.

In some embodiments, the information on whether the relay terminal equipment is in an RRC idle or RRC inactive state may indicate that the relay terminal equipment is in the RRC_Idle or RRC_Inactive state, or that the relay terminal equipment is not in the RRC_Idle or RRC_Inactive state. Thus, it is possible to indicate the RRC state of the relay terminal equipment with fewer bits, for example, the information on whether the relay terminal equipment is in the RRC idle or RRC inactive state may be 1 bit.

In some embodiments, the first information in the first indication information causing the remote terminal equipment to trigger or transmit the first PC5-RRC message may be 1 bit. Or, the first information in the first indication information causing the remote terminal equipment to trigger or transmit the first PC5-RRC message may be optional.

In some embodiments, in a case where the relay terminal equipment is in the RRC_Idle or RRC_Inactive state, the first information may be a value indicating that the remote terminal equipment triggers or transmits the first PC5-RRC message; and in the case where the relay terminal equipment is in the RRC_Connected state, the first information may be a value indicating that the remote terminal equipment does not trigger or transmit the first PC5-RRC message.

In some embodiments, the relay terminal equipment may transmit the first indication information at various times. For example, the relay terminal equipment may transmit the first indication information during a PC5 discovery procedure, or transmit the first indication information after the PC5 discovery procedure; and/or, the relay terminal equipment may transmit the first indication information during a PC5 connection establishment procedure with the remote terminal equipment, or transmit the first indication information after the PC5 connection establishment procedure with the remote terminal equipment.

In other words, transmitting the first indication information by the relay terminal equipment to the remote terminal equipment may be incorporated into the PC5 discovery procedure or the PC5 connection establishment procedure. For example, the relay terminal equipment may add the RRC state information of the relay terminal equipment to original steps of the PC5 discovery procedure or the PC5 connection establishment procedure. Therefore, the RRC state information of the relay terminal equipment may be transmitted in the original steps of the PC5 discovery procedure or the PC5 connection establishment procedure, which is relatively good in compatibility. Or, transmitting the first indication information by the relay terminal equipment to the remote terminal equipment may also be a separate step. For example, the separate step may be a newly-added step in the PC5 discovery procedure or the PC5 connection establishment procedure, or it may be a step outside of the PC5 discovery procedure or the PC5 connection establishment procedure.

In some embodiments, the first indication information may be included in various messages transmitted by the relay terminal equipment to the remote terminal equipment. For example, the first indication information may be included in the PC5-S message and/or the second PC5-RRC message and/or MAC CE transmitted by the relay terminal equipment to the remote terminal equipment.

The PC5-S message may include at least one of the following: a direct communication request; or a direct communication response; however, this disclosure is not limited thereto, and the PC5-S message may also include other messages.

The second PC5-RRC message may include at least one of the following: RRCReconfigurationSidelink; RRCReconfigurationCompleteSidelink; UEAssistanceInformationSidelink; or NotificationMessageSidelink; however, this disclosure is not limited thereto, and the PC5-RRC message may also include other messages.

The MAC CE may be a new MAC CE; however, this disclosure is not limited thereto, and the MAC CE may also include an existing MAC CE.

For example, the first indication information may be included in a discovery-related message transmitted by the relay terminal equipment to the remote terminal equipment. The discovery-related message may include at least one of the following: a discovery solicitation; or, a discovery response.

In some embodiments, as shown in FIG. 9, the multi-path communication method may further include:
903: transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.

In the above embodiment, by transmitting the third indication information by the relay terminal equipment to the remote terminal equipment, the remote terminal equipment may be made not to trigger the first PC5-RRC message or to cancel the first PC5-RRC message or not to transmit the first PC5-RRC message to the relay terminal equipment, thereby saving signaling overhead, and avoiding unnecessary operations by the remote terminal equipment and/or the relay terminal equipment.

In some embodiments, the third indication information may include at least one of the following: information on a first serving cell or a first serving base station of the relay terminal equipment; information on that the relay terminal equipment changes a serving cell or a serving base station; information on that the first serving cell of the relay terminal equipment is different from the second serving cell to which the remote terminal equipment is connected via a direct path; or information on that the first serving base station of the relay terminal equipment is different from the second serving base station to which the remote terminal equipment is connected via a direct path.

In some embodiments, the information on that the relay terminal equipment changes a serving cell or a serving base station may include information on that the relay terminal equipment performs cell selection or cell reselection or handover.

In some embodiments, reference may be made to the time and/or method for transmitting the first indication information for a time and/or method for transmitting the third indication information.

In some embodiments, the relay terminal equipment may transmit the third indication information at various times. For example, transmitting the third indication information by the relay terminal equipment to the remote terminal equipment may be incorporated into the PC5 discovery procedure or the PC5 connection establishment procedure, or transmitting the third indication information by the relay terminal equipment to the remote terminal equipment may be a separate step.

In some embodiments, the third indication information may be included in various messages transmitted by the relay terminal equipment to the remote terminal equipment. For example, the third indication information may be included in the discovery-related message (discovery message) or the second PC5-RRC message transmitted by the relay terminal equipment to the remote terminal equipment.

The discovery-related message may include at least one of the following: a discovery solicitation, or a discovery response. The second PC5-RRC message may include at least one of the following: RRCReconfigurationSidelink; RRCReconfigurationCompleteSidelink; UEAssistanceInformationSidelink; or NotificationMessageSidelink.

In some embodiments, the first PC5-RRC message may include PC5-RRC trigger. The PC5-RRC trigger may be used to trigger the relay terminal equipment to enter the RRC connected state.

In some embodiments, the first PC5-RRC message may be a kind of RRC message of PC5 interfaces.

For example, the first PC5-RRC message may be a new PC5-RRC message. For example, if the remote terminal equipment transmits the new PC5-RRC message, it indicates that the relay terminal equipment needs to enter the RRC_Connected state.

For another example, the first PC5-RRC message may be an existing PC5-RRC message. For example, the first PC5-RRC message may include at least one of the following: RemoteUEInformationSidelink, RRCReconfigurationSidelink, RRCReconfigurationCompleteSidelink, or UEAssistanceInformationSidelink.

For a further example, the PC5-RRC trigger may be included as a new IE in a new PC5-RRC message or an existing PC5-RRC message, wherein the IE may be 1 bit, or, the IE may be optional.

In some embodiments, as shown in FIG. 9, the multi-path communication method may further include:
904: initiating an RRC connection establishment procedure or an RRC resume procedure by the relay terminal equipment according to the first PC5-RRC message. Reference may be made to relevant techniques for a specific method for initiating an RRC connection establishment procedure or an RRC resume procedure by the relay terminal equipment.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the above embodiment, the relay terminal equipment transmits the first indication information to the remote terminal equipment, and receives the first PC5-RRC message causing the relay terminal equipment to enter the RRC connected state transmitted by the remote terminal equipment. Hence, the relay terminal equipment is able to enter the RRC connected state according to the first PC5-RRC message, thereby being enabled to provide relay services for the remote terminal equipment, which is helpful to successfully adding or changing an indirect path.

### Embodiment of a fourth aspect

The embodiment of this disclosure provides a multi-path communication method, applicable to a relay terminal equipment side, with contents identical to those in the embodiment of the second aspect being not going to be described herein any further. The embodiment of the fourth aspect may be implemented separately, or, the embodiment of the fourth aspect may be implemented in combination with the embodiment of the third aspect.

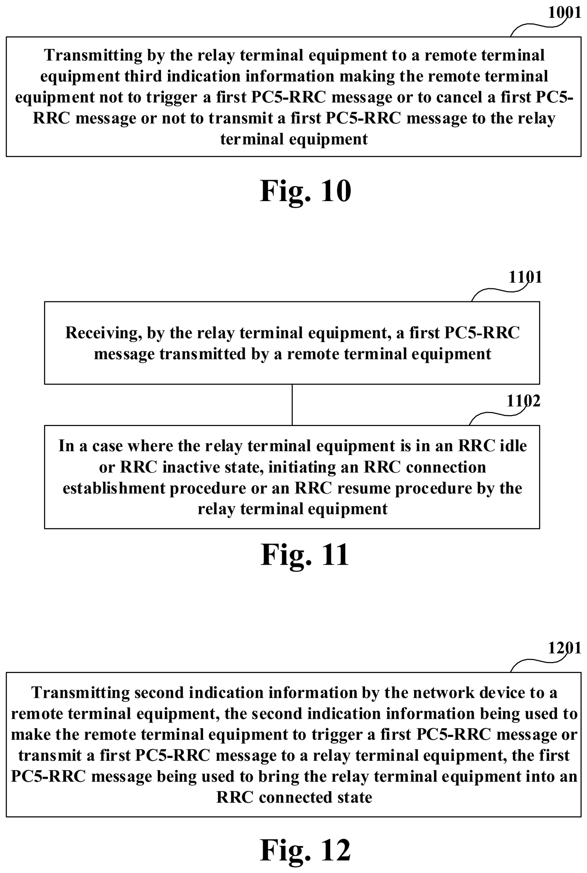

FIG. 10 is a schematic diagram of the multi-path communication method of the embodiment of this disclosure. As shown in FIG. 10, the method includes:
1001: transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.

It should be noted that FIG. 10 only schematically illustrates the embodiment of this disclosure; however, this disclosure is not limited thereto. For example, an order of execution of the steps may be appropriately adjusted, and furthermore, some other steps may be added, or some steps therein may be reduced, without being limited to what is contained in FIG. 10.

In the above embodiment, by transmitting the third indication information by the relay terminal equipment to the remote terminal equipment, the remote terminal equipment may be made not to trigger the first PC5-RRC message or to cancel the first PC5-RRC message or not to transmit the first PC5-RRC message to the relay terminal equipment, thereby saving signaling overhead, and avoiding unnecessary operations by the remote terminal equipment and/or the relay terminal equipment.

In some embodiments, the third indication information may include at least one of the following: information on a first serving cell or a first serving base station of the relay terminal equipment; information on that the relay terminal equipment changes a serving cell or a serving base station; information on that the first serving cell of the relay terminal equipment is different from the second serving cell to which the remote terminal equipment is connected via a direct path; or information on that the first serving base station of the relay terminal equipment is different from the second serving base station to which the remote terminal equipment is connected via a direct path.

In some embodiments, the information on that the relay terminal equipment changes a serving cell or a serving base station may include information on that the relay terminal equipment performs cell selection or cell reselection or handover.

In some embodiments, reference may be made to the time and/or method for transmitting the third indication information in the embodiment of the third aspect for a time and/or method for transmitting the third indication information.

In some embodiments, the relay terminal equipment may transmit the third indication information at various times. For example, transmitting the third indication information by the relay terminal equipment to the remote terminal equipment may be incorporated into a PC5 discovery procedure or a PC5 connection establishment procedure, or transmitting the third indication information by the relay terminal equipment to the remote terminal equipment may be a separate step.

In some embodiments, the third indication information may be included in various messages transmitted by the relay terminal equipment to the remote terminal equipment. For example, the third indication information may be included in a discovery-related message (discovery message) or a second PC5-RRC message transmitted by the relay terminal equipment to the remote terminal equipment.

The discovery-related message may include at least one of the following: a discovery solicitation, or a discovery response.

The second PC5-RRC message may include at least one of the following: RRCReconfigurationSidelink; RRCReconfigurationCompleteSidelink; UEAssistanceInformationSidelink; or NotificationMessageSidelink.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the above embodiment, the remote terminal equipment receives the third indication information transmitted by the relay terminal equipment, and does not trigger the first PC5-RRC message or cancels the first PC5-RRC message or does not transmit the first PC5-RRC message to the relay terminal equipment according to the third indication information, thereby saving signaling overhead, and avoiding executing unnecessary operations by the remote terminal equipment and/or the relay terminal equipment.

### Embodiment of a fifth aspect

The embodiment of this disclosure provides a multi-path communication method, applicable to a relay terminal equipment side, with contents identical to those in the embodiment of the first aspect being not going to be described herein any further. The embodiment of the fifth aspect may be implemented separately, or, the embodiment of the fifth aspect may be implemented in combination with the embodiment(s) of the third aspect and/or the fourth aspect.

FIG. 11 is a schematic diagram of the multi-path communication method of the embodiment of this disclosure. As shown in FIG. 11, the method includes:
1101: receiving, by the relay terminal equipment, a first PC5-RRC message transmitted by a remote terminal equipment; and
1102: in a case where the relay terminal equipment is in an RRC idle or RRC inactive state, initiating an RRC connection establishment procedure or an RRC resume procedure by the relay terminal equipment.

It should be noted that FIG. 11 only schematically illustrates the embodiment of this disclosure; however, this disclosure is not limited thereto. For example, an order of execution of the steps may be appropriately adjusted, and furthermore, some other steps may be added, or some steps therein may be reduced, without being limited to what is contained in FIG. 11.

In the above embodiments, the remote terminal equipment may always transmit the first PC5-RRC message to the relay terminal equipment without taking whether the relay terminal equipment is in the RRC_Idle or RRC_Inactive state into account. For example, after receiving the RRC reconfiguration message for adding or changing an indirect path transmitted by the network device, the remote terminal equipment transmits the first PC5-RRC message to the relay terminal equipment. Therefore, the remote terminal equipment does not need to obtain the RRC state information of the relay terminal equipment, and the method is simple.

In some embodiments, as shown in FIG. 11, the communication method may further include:
1102: ignoring the first PC5-RRC message by the relay terminal equipment in a case where the relay terminal equipment is in the RRC connected state.

Thus, unnecessary operations by relay terminal equipments may be avoided.

For example, at the relay terminal equipment side, after receiving the first PC5-RRC message, the relay terminal equipment decides whether to initiate a relevant process to enter the RRC_Connected state according to current RRC state of its own. If the relay terminal equipment is in the RRC_Connected state, the relay terminal equipment ignores the first PC5-RRC message; and if the relay terminal equipment is in the RRC_Idle or RRC_Inactive state, it initiates an RRC connection establishment procedure or an RRC resume procedure.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the above embodiment, the remote terminal equipment may always transmit the first PC5-RRC message to the relay terminal equipment without taking whether the relay terminal equipment is in the RRC_Idle or RRC_Inactive state into account. For example, after receiving the RRC reconfiguration message for adding or changing an indirect path transmitted by the network device, the remote terminal equipment transmits the first PC5-RRC message to the relay terminal equipment. Therefore, the remote terminal equipment does not need to obtain the RRC state information of the relay terminal equipment, and the method is simple.

### Embodiment of a sixth aspect

The embodiment of this disclosure provides a multi-path communication method, applicable to a network device side, with contents identical to those in the embodiment of the first aspect being not going to be described herein any further.

FIG. 12 is a schematic diagram of the multi-path communication method of the embodiment of this disclosure. As shown in FIG. 12, the method includes:
1201: transmitting second indication information by the network device to a remote terminal equipment, the second indication information being used to make the remote terminal equipment to trigger a first PC5-RRC message or transmit a first PC5-RRC message to a relay terminal equipment, the first PC5-RRC message being used to bring the relay terminal equipment into an RRC connected state.

It should be noted that FIG. 12 only schematically illustrates the embodiment of this disclosure; however, this disclosure is not limited thereto. For example, an order of execution of the steps may be appropriately adjusted, and furthermore, some other steps may be added, or some steps therein may be reduced, without being limited to what is contained in FIG. 12.

According to the above embodiment, the network device transmits the second indication information causing the remote terminal equipment to trigger or transmit the first PC5-RRC message to the relay terminal equipment to the remote terminal equipment, the first PC5-RRC message being used to cause the relay terminal equipment to enter the RRC connected state. Hence, the relay terminal equipment may be enabled to enter the RRC connected state, thereby enabling the relay terminal equipment to provide relay services to the remote terminal equipment, which is helpful to successfully adding or changing an indirect path.

In some embodiments, the second indication information transmitted by the network device to the remote terminal equipment may include at least one of the following: RRC state information of the relay terminal equipment, second information causing the remote terminal equipment to trigger or transmit the first PC5-RRC message, or an RRC reconfiguration message for adding or changing an indirect path.

In some embodiments, the RRC state information includes at least one of the following: information on the RRC state of the relay terminal equipment; information on whether the relay terminal equipment is in the RRC connected state; or information on whether the relay terminal equipment is in the RRC idle or RRC inactive state.

In some embodiments, the second indication information may be transmitted via a direct path.

In some embodiments, the RRC state information of the relay terminal equipment in the second indication information and/or the second information causing the remote terminal equipment to trigger or transmit the first PC5-RRC message may be included in at least one of the following: an RRC message; a PDCP control PDU; an RLC control PDU; an MAC CE; or DCI.

In some embodiments, in the case where the network device transmits the RRC state information of the relay terminal equipment and/or the second information via the RRC message, the RRC message may be an RRC reconfiguration message for adding or changing an indirect path. However, this disclosure is not limited thereto, and the RRC message may also be other messages, or, the RRC state information of the relay terminal equipment and/or the second information may also be transmitted by other means.

In some embodiments, in the case where the second indication information includes the RRC reconfiguration message for adding or changing an indirect path, the remote terminal equipment triggers or transmits the first PC5-RRC message to the relay terminal equipment. In other words, the remote terminal equipment may also transmit the first PC5-RRC message to the relay terminal equipment upon receiving the RRC reconfiguration message for adding or changing an indirect path transmitted by the network device without taking whether the relay terminal equipment is in the RRC_Idle or RRC_Inactive state into account. At the relay terminal equipment side, after receiving the first PC5-RRC message, the relay terminal equipment may decide whether to initiate a relevant process to enter the RRC_Connected state according to a current RRC state of its own. Therefore, the remote terminal equipment does not need to obtain the RRC state information of the relay terminal equipment, and the method is simple. Wherein, reference may be made to relevant techniques for a specific method for the network device to transmit the RRC reconfiguration message for adding or changing an indirect path.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the above embodiment, the network device transmits the second indication information causing the remote terminal equipment to trigger or transmit the first PC5-RRC message to the relay terminal equipment to the remote terminal equipment, the first PC5-RRC message being used to cause the relay terminal equipment to enter the RRC connected state. Hence, the relay terminal equipment may be enabled to enter the RRC connected state, thereby enabling the relay terminal equipment to provide relay services to the remote terminal equipment, which is helpful to successfully adding or changing an indirect path.

### Embodiment of a seventh aspect

The embodiment of this disclosure provides a multi-path communication apparatus. The apparatus may be, for example, a remote terminal equipment, or may be one or some components or assemblies configured in the remote terminal equipment, with contents identical to those in the embodiment of the first aspect being not going to be described herein any further.

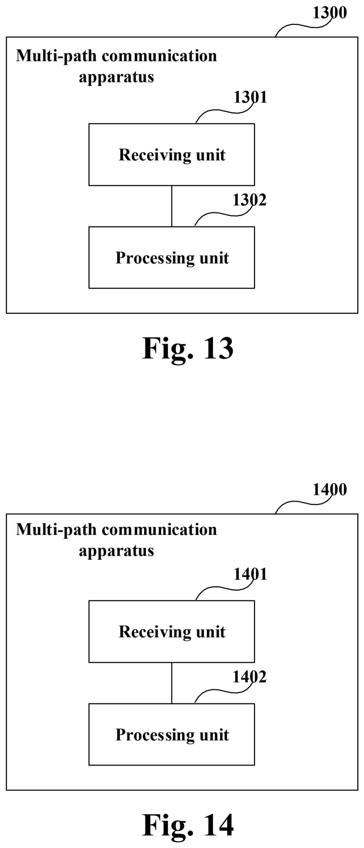

FIG. 13 is a schematic diagram of the multi-path communication apparatus of the embodiment of this disclosure. As shown in FIG. 13, the multi-path communication apparatus 1600 includes:
a receiving unit 1301 configured to receive first indication information transmitted by a relay terminal equipment or second indication information transmitted by a network device; and
a processing unit 1302 configured to trigger or transmit a first PC5-RRC message to the relay terminal equipment according to the first indication information or the second indication information, the first PC5-RRC message being used to bring the relay terminal equipment into a radio resource control connected state.

In some embodiments, the first indication information includes at least one of the following:
RRC state information of the relay terminal equipment; or
first information causing the remote terminal equipment to trigger or transmit the first PC5-RRC message.

In some embodiments, the remote terminal equipment receives the first indication information during or after a PC5 discovery procedure; and/or,
the remote terminal equipment receives the first indication information during or after a PC5 connection establishment procedure with the relay terminal equipment.

In some embodiments, the remote terminal equipment receives the first indication information before or after receiving measurement configuration information transmitted by the network device; or,
the remote terminal equipment receives the first indication information before or after transmitting a measurement report to the network device; or,
the remote terminal equipment receives the first indication information before or after receiving a radio resource control reconfiguration message for adding or changing an indirect path transmitted by the network device.

In some embodiments, the first indication information is included in a PC5-S message or a second PC5-RRC message or an MAC CE transmitted by the relay terminal equipment to the remote terminal equipment.

In some embodiments, the PC5-S message includes at least one of the following:
a direct communication request; or
a direct communication response;
   and/or
the second PC5-RRC message includes at least one of the following:
   RRCReconfigurationSidelink;
   RRCReconfigurationCompleteSidelink;
   UEAssistanceInformationSidelink; or
   NotificationMessageSidelink;
      and/or
   the MAC CE is a new MAC CE.

In some embodiments, the first indication information is included in a discovery-related message transmitted by the relay terminal equipment to the remote terminal equipment.

In some embodiments, the discovery-related message includes at least one of the following:
a discovery solicitation; or
a discovery response.

In some embodiments, the RRC state information includes at least one of the following:
information on the RRC state of the relay terminal equipment;
information on whether the relay terminal equipment is in an RRC connected state; or
information on whether the relay terminal equipment is in an RRC idle state or an RRC inactive state.

In some embodiments, the first information causing the remote terminal equipment to trigger or transmit the first PC5-RRC message is 1 bit.

In some embodiments, in a case where the RRC state information indicates that the relay terminal equipment is in an RRC idle state or an RRC inactive state or is not in an RRC connected state, the remote terminal equipment triggers or transmits the first PC5-RRC message to the relay terminal equipment; or,
in a case where the first information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment.

In some embodiments, the second indication information includes at least one of the following:
RRC state information of the relay terminal equipment;
second information causing the remote terminal equipment to trigger or transmit the first PC5-RRC message; or
an RRC reconfiguration message for adding or changing an indirect path.

In some embodiments, the second indication information is received via a direct path.

In some embodiments, the RRC state information of the relay terminal equipment and/or the second information causing the remote terminal equipment to trigger or transmit the first PC5-RRC message is/are included in at least one of the following:
an RRC message;
a PDCP control PDU;
an RLC control PDU;
an MAC CE; or
DCI.

In some embodiments, the RRC message is an RRC reconfiguration message for adding or changing an indirect path.

In some embodiments, the RRC state information includes at least one of the following:
information on the RRC state of the relay terminal equipment;
information on whether the relay terminal equipment is in the RRC connected state; or
information on whether the relay terminal equipment is in the RRC idle or RRC inactive state.

In some embodiments, in a case where the RRC state information indicates that the relay terminal equipment is in an RRC idle state or an RRC inactive state or is not in an RRC connected state, the remote terminal equipment triggers or transmits the first PC5-RRC message to the relay terminal equipment; or,
in a case where the second information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment; or,
in a case where the RRC reconfiguration message for adding or changing an indirect path is received, the remote terminal equipment triggers or transmits the first PC5-RRC message to the relay terminal equipment.

In some embodiments, the remote terminal equipment further receives third indication information transmitted by the relay terminal equipment, and according to the third indication information, and does not trigger the first PC5-RRC message, or cancels the first PC5-RRC message, or does not transmit the first PC5-RRC message to the relay terminal equipment.

In some embodiments, in a case where a first serving cell of the relay terminal equipment included in the third indication information is different from a second serving cell connected to the remote terminal equipment via a direct path, or in a case where a first serving base station of the relay terminal equipment included in the third indication information is different from a second serving base station connected to the remote terminal equipment via a direct path, the remote terminal equipment does not trigger the first PC5-RRC message or cancels the first PC5-RRC message, or does not transmit the first PC5-RRC message to the relay terminal equipment.

In some embodiments, the third indication information includes at least one of the following:
information on a first serving cell or a first serving base station of the relay terminal equipment;
information on that the relay terminal equipment changes a serving cell or a serving base station;
information on that the first serving cell of the relay terminal equipment is different from the second serving cell connected to the remote terminal equipment via a direct path; or
information on that the first serving base station of the relay terminal equipment is different from the second serving base station connected to the remote terminal equipment via a direct path.

In some embodiments, the information on that the relay terminal equipment changes a serving cell or a serving base station includes:
information on that the relay terminal equipment performs cell selection or cell reselection or handover.

In some embodiments, the third indication information is included in a discovery-related message or a second PC5-RRC message transmitted by the relay terminal equipment to the remote terminal equipment.

In some embodiments, the first PC5-RRC message includes PC5-RRC trigger, the PC5-RRC trigger being used to trigger the relay terminal equipment to enter an RRC connected state.

In some embodiments, the first PC5-RRC message is a new PC5-RRC message or an existing PC5-RRC message; or
the PC5-RRC trigger is included as a new IE in a new PC5-RRC message or an existing PC5-RRC message.

In some embodiments, the first PC5-RRC message includes at least one of the following:
RemoteUEInformationSidelink;
RRCReconfigurationSidelink;
RRCReconfigurationCompleteSidelink; or
UEAssistanceInformationSidelink.

In some embodiments, the IE is 1 bit, or, the IE is optional.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1600 may further include other components or modules, and reference may be made to related techniques for particulars of these components or modules.

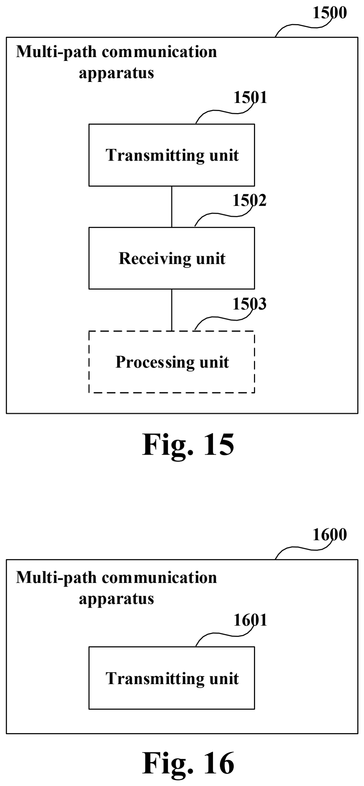

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the remote terminal equipment receives the first indication information transmitted by the relay terminal equipment or the second indication information transmitted by the network device, and triggers or transmits the first PC5-RRC message to the relay terminal equipment according to the first indication information or the second indication information. Thus, the relay terminal equipment may be caused to enter the RRC connected state. Hence, the relay terminal equipment is enabled to provide relay services for the remote terminal equipment, which is helpful to successfully adding or changing an indirect path.

### Embodiment of an eighth aspect

The embodiment of this disclosure provides a multi-path communication apparatus. The apparatus may be, for example, a remote terminal equipment, or may be one or some components or assemblies configured in the remote terminal equipment, with contents identical to those in the embodiment of the second aspect being not going to be described herein any further.

FIG. 14 is a schematic diagram of the multi-path communication apparatus of the embodiment of this disclosure. As shown in FIG. 14, the multi-path communication apparatus 1400 includes:
a receiving unit 1401 configured to receive third indication information transmitted by a relay terminal equipment; and
a processing unit 1402 configured to not to trigger a first PC5-RRC message, or configured to cancel a first PC5-RRC message, or configured to not to transmit a first PC5-RRC message to the relay terminal equipment, according to the third indication information.

In some embodiments, in a case where a first serving cell of the relay terminal equipment included in the third indication information is different from a second serving cell to which the remote terminal equipment is connected via a direct path, or in a case where a first serving base station of the relay terminal equipment included in the third indication information is different from a second serving base station to which the remote terminal equipment is connected via a direct path, the remote terminal equipment does not trigger the first PC5-RRC message or cancels the first PC5-RRC message or does not transmit the first PC5-RRC message to the relay terminal equipment.

In some embodiments, the third indication information includes at least one of the following:
information on a first serving cell or a first serving base station of the relay terminal equipment;
information on that the relay terminal equipment changes a serving cell or a serving base station;
information on that the first serving cell of the relay terminal equipment is different from the second serving cell connected to the remote terminal equipment via a direct path; or
information on that the first serving base station of the relay terminal equipment is different from the second serving base station connected to the remote terminal equipment via a direct path.

In some embodiments, the information on that the relay terminal equipment changes a serving cell or a serving base station includes:
information on that the relay terminal equipment performs cell selection or cell reselection or handover.

In some embodiments, the third indication information is included in a discovery-related message or a second PC5-RRC message transmitted by the relay terminal equipment to the remote terminal equipment.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1400 may further include other components or modules, and reference may be made to related techniques for particulars of these components or modules.

Furthermore, for the sake of simplicity, connection relationships between the components or modules or signal profiles thereof are only illustrated in FIG. 14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the remote terminal equipment receives the third indication information transmitted by the relay terminal equipment, and does not trigger the first PC5-RRC message or cancels the first PC5-RRC message or does not transmit the first PC5-RRC message to the relay terminal equipment according to the third indication information, thereby saving signaling overhead, and avoiding executing unnecessary operations by the remote terminal equipment and/or the relay terminal equipment.

### Embodiment of a ninth aspect

The embodiment of this disclosure provides a multi-path communication apparatus. The apparatus may be, for example, a relay terminal equipment, or may be one or some components or assemblies configured in the relay terminal equipment, with contents identical to those in the embodiment of the third aspect being not going to be described herein any further.

FIG. 15 is a schematic diagram of the multi-path communication apparatus of the embodiment of this disclosure. As shown in FIG. 15, the multi-path communication apparatus 1500 includes:
a transmitting unit 1501 configured to transmit first indication information to a remote terminal equipment; and
a receiving unit 1502 configured to receive a first PC5-RRC message transmitted by the remote terminal equipment, the first PC5-RRC message being used to bring the relay terminal equipment into a radio resource control connected state.

In some embodiments, the first indication information includes at least one of the following:
RRC state information of the relay terminal equipment; or
first information causing the remote terminal equipment to trigger or transmit the first PC5-RRC message.

In some embodiments, the relay terminal equipment transmits the first indication information during a PC5 discovery procedure, or transmit the first indication information after the PC5 discovery procedure; and/or,
the relay terminal equipment transmits the first indication information during a PC5 connection establishment procedure with the remote terminal equipment, or transmits the first indication information after the PC5 connection establishment procedure with the remote terminal equipment.

In some embodiments, the first indication information is included in the PC5-S message and/or the second PC5-RRC message and/or MAC CE transmitted by the relay terminal equipment to the remote terminal equipment.

In some embodiments, the PC5-S message includes at least one of the following: a direct communication request; or
a direct communication response;
and/or

The second PC5-RRC message includes at least one of the following:
RRCReconfigurationSidelink;
RRCReconfigurationCompleteSidelink;
UEAssistanceInformationSidelink; or
NotificationMessageSidelink;
   and/or
the MAC CE is a new MAC CE.

In some embodiments, the first indication information is included in a discovery-related message transmitted by the relay terminal equipment to the remote terminal equipment.

In some embodiments, the discovery-related message includes at least one of the following:
a discovery solicitation; or,
a discovery response.

In some embodiments, the RRC state information includes at least one of the following:
information on the RRC state of the relay terminal equipment;
information on whether the relay terminal equipment is in the RRC connected state; or
information on whether the relay terminal equipment is in the RRC idle or RRC inactive state.

In some embodiments, the first information causing the remote terminal equipment to trigger or transmit the first PC5-RRC message is 1 bit.

In some embodiments, the transmitting unit 1501 transmits to the remote terminal equipment third indication information making the remote terminal equipment not to trigger a first PC5-RRC message or to cancel a first PC5-RRC message or not to transmit a first PC5-RRC message to the relay terminal equipment.

In some embodiments, the third indication information includes at least one of the following:
information on a first serving cell or a first serving base station of the relay terminal equipment;
information on that the relay terminal equipment changes a serving cell or a serving base station;
information on that the first serving cell of the relay terminal equipment is different from the second serving cell connected to the remote terminal equipment via a direct path; or
information on that the first serving base station of the relay terminal equipment is different from the second serving base station connected to the remote terminal equipment via a direct path.

In some embodiments, the information on that the relay terminal equipment changes a serving cell or a serving base station includes:
information on that the relay terminal equipment performs cell selection or cell reselection or handover.

In some embodiments, the third indication information is included in a discovery-related message or a second PC5-RRC message transmitted by the relay terminal equipment to the remote terminal equipment.

In some embodiments, the first PC5-RRC message includes PC5-RRC trigger, the PC5-RRC trigger being used to trigger the relay terminal equipment to enter an RRC connected state.

In some embodiments, the first PC5-RRC message is a new PC5-RRC message or an existing PC5-RRC message; or the PC5-RRC trigger is included as a new IE in a new PC5-RRC message or an existing PC5-RRC message.

In some embodiments, the first PC5-RRC message includes at least one of the following:
RemoteUEInformationSidelink;
RRCReconfigurationSidelink;
RRCReconfigurationCompleteSidelink; or
UEAssistanceInformationSidelink.
In some embodiments, the IE is 1 bit, or,
the IE is optional.

In some embodiments, the apparatus further includes:
a processing unit 1503 configured to initiate an RRC connection establishment procedure or an RRC resume procedure according to the first PC5-RRC message.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1500 may further include other components or modules, and reference may be made to related techniques for particulars of these components or modules.

Furthermore, for the sake of simplicity, connection relationships between the components or modules or signal profiles thereof are only illustrated in FIG. 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the relay terminal equipment transmits the first indication information to the remote terminal equipment, and receives the first PC5-RRC message causing the relay terminal equipment to enter the RRC connected state transmitted by the remote terminal equipment. Hence, the relay terminal equipment is able to enter the RRC connected state according to the first PC5-RRC message, thereby being enabled to provide relay services for the remote terminal equipment, which is helpful to successfully adding or changing an indirect path.

### Embodiment of a tenth aspect

The embodiment of this disclosure provides a multi-path communication apparatus. The apparatus may be, for example, a relay terminal equipment, or may be one or some components or assemblies configured in the relay terminal equipment, with contents identical to those in the embodiment of the fourth aspect being not going to be described herein any further.

FIG. 16 is a schematic diagram of the multi-path communication apparatus of the embodiment of this disclosure. As shown in FIG. 16, the multi-path communication apparatus 1600 includes:
a transmitting unit 1601 configured to transmit to a remote terminal equipment third indication information making the remote terminal equipment not to trigger a first PC5-RRC message or to cancel a first PC5-RRC message or not to transmit a first PC5-RRC message to the relay terminal equipment.

In some embodiments, the third indication information includes at least one of the following:
information on a first serving cell or a first serving base station of the relay terminal equipment;
information on that the relay terminal equipment changes a serving cell or a serving base station;
information on that the first serving cell of the relay terminal equipment is different from the second serving cell to which the remote terminal equipment is connected via a direct path; or
information on that the first serving base station of the relay terminal equipment is different from the second serving base station to which the remote terminal equipment is connected via a direct path.

In some embodiments, the information on that the relay terminal equipment changes a serving cell or a serving base station includes:
information on that the relay terminal equipment performs cell selection or cell reselection or handover.

In some embodiments, the third indication information is included in a discovery-related message or a second PC5-RRC message transmitted by the relay terminal equipment to the remote terminal equipment.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1600 may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the relay terminal equipment transmits the third indication information to the remote terminal equipment, and the remote terminal equipment is made not to trigger the first PC5-RRC message or to cancel the first PC5-RRC message or not to transmit the first PC5-RRC message to the relay terminal equipment, thereby saving signaling overhead, and avoiding executing unnecessary operations by the remote terminal equipment and/or the relay terminal equipment.

### Embodiment of an eleventh aspect

The embodiment of this disclosure provides a multi-path communication apparatus. The apparatus may be, for example, a relay terminal equipment, or may be one or some components or assemblies configured in the relay terminal equipment, with contents identical to those in the embodiment of the fifth aspect being not going to be described herein any further.

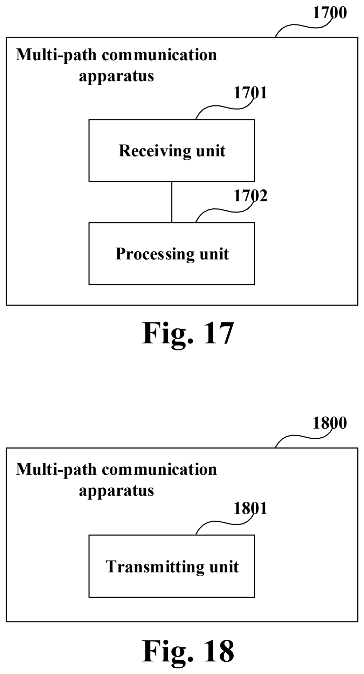

FIG. 17 is a schematic diagram of the multi-path communication apparatus of the embodiment of this disclosure. As shown in FIG. 17, the multi-path communication apparatus 1700 includes:
a receiving unit 1701 configured to receive a first PC5-RRC message transmitted by a remote terminal equipment; and
a processing unit 1702 configured to initiate an RRC connection establishment procedure or an RRC resume procedure in a case where the relay terminal equipment is in an RRC idle or RRC inactive state.

In some embodiments, the relay terminal equipment ignores the first PC5-RRC message in a case where the relay terminal equipment is in the RRC connected state.

In some embodiments, the first PC5-RRC message includes PC5-RRC trigger, the PC5-RRC trigger being used to trigger the relay terminal equipment to enter an RRC connected state.

In some embodiments, the first PC5-RRC message is a new PC5-RRC message or an existing PC5-RRC message; or
the PC5-RRC trigger is included as a new IE in a new PC5-RRC message or an existing PC5-RRC message.

In some embodiments, the first PC5-RRC message includes at least one of the following:
RemoteUEInformationSidelink;
RRCReconfigurationSidelink;
RRCReconfigurationCompleteSidelink; or
UEAssistanceInformationSidelink.

In some embodiments, the IE is 1 bit, or, the IE is optional.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1700 may further include other components or modules, and reference may be made to related techniques for particulars of these components or modules.

Furthermore, for the sake of simplicity, connection relationships between the components or modules or signal profiles thereof are only illustrated in FIG. 17. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the remote terminal equipment may always transmit the first PC5-RRC message to the relay terminal equipment without taking whether the relay terminal equipment is in the RRC_Idle or RRC_Inactive state into account. For example, after receiving the RRC reconfiguration message for adding or changing an indirect path transmitted by the network device, the remote terminal equipment transmits the first PC5-RRC message to the relay terminal equipment. Therefore, the remote terminal equipment does not need to obtain the RRC state information of the relay terminal equipment, and the method is simple.

### Embodiment of a twelfth aspect

The embodiment of this disclosure provides a multi-path communication apparatus. The apparatus may be, for example, a network device, or may be one or some components or assemblies configured in the network device, with contents identical to those in the embodiment of the sixth aspect being not going to be described herein any further.

FIG. 18 is a schematic diagram of the multi-path communication apparatus of the embodiment of this disclosure. As shown in FIG. 18, the multi-path communication apparatus 1800 includes:
a transmitting unit 1801 configured to transmit second indication information to a remote terminal equipment, the second indication information being used to make the remote terminal equipment to trigger or transmit first PC5-RRC message to the relay terminal equipment, the first PC5-RRC message being used to bring the relay terminal equipment into an RRC connected state.

In some embodiments, the second indication information includes at least one of the following:
RRC state information of the relay terminal equipment;
second information causing the remote terminal equipment to trigger or transmit the first PC5-RRC message; or
an RRC reconfiguration message for adding or changing an indirect path.

In some embodiments, the second indication information is transmitted via a direct path.

In some embodiments, the RRC state information of the relay terminal equipment and/or the second information causing the remote terminal equipment to trigger or transmit the first PC5-RRC message is/are included in at least one of the following:
an RRC message;
a PDCP control PDU;
an RLC control PDU;
an MAC CE; or
DCI.

In some embodiments, the RRC message is an RRC reconfiguration message for adding or changing an indirect path.

In some embodiments, the RRC state information includes at least one of the following:
information on the RRC state of the relay terminal equipment;
information on whether the relay terminal equipment is in the RRC connected state; or
information on whether the relay terminal equipment is in the RRC idle or RRC inactive state.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the multi-path communication apparatus 1800 may further include other components or modules, and reference may be made to related techniques for particulars of these components or modules.

Furthermore, for the sake of simplicity, connection relationships between the components or modules or signal profiles thereof are only illustrated in FIG. 18. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the above embodiment, the network device transmits the second indication information causing the remote terminal equipment to trigger or transmit the first PC5-RRC message to the relay terminal equipment to the remote terminal equipment, the first PC5-RRC message being used to cause the relay terminal equipment to enter the RRC connected state. Hence, the relay terminal equipment may be enabled to enter the RRC connected state, thereby enabling the relay terminal equipment to provide relay services to the remote terminal equipment, which is helpful to successfully adding or changing an indirect path.

### Embodiment of a thirteenth aspect

The embodiment of this disclosure provides a communication system, and reference may be made to FIG. 1, with contents identical to those in the embodiments of the first to the twelfth aspects being not going to be described herein any further.

In some embodiments, the communication system 100 may include: a remote terminal equipment 101 and/or a relay terminal equipment 102 and/or a network device 103.

In the embodiment of this disclosure, the remote terminal equipment 101 may be configured to carry out the multi-path communication method in the embodiment(s) of the first aspect and/or the second aspect, the contents of which being incorporated herein, which shall not be described herein any further.

In the embodiment of this disclosure, the network device 103 may be configured to carry out the multi-path communication method in the embodiment(s) of the third aspect and/or the fourth aspect and/or the fifth aspect, the contents of which being incorporated herein, which shall not be described herein any further.

In the embodiment of this disclosure, the network device 103 may be configured to carry out the multi-path communication method in the embodiment of the sixth aspect, the contents of which being incorporated herein, which shall not be described herein any further.

The embodiment of this disclosure further provides a remote terminal equipment.

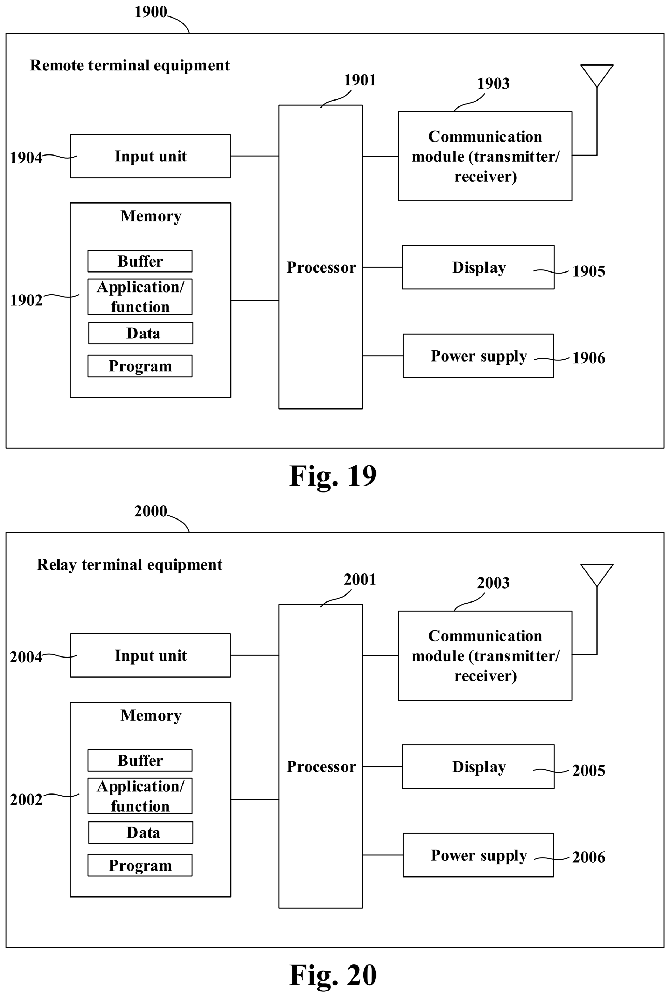

FIG. 19 is a schematic diagram of a structure of the terminal equipment of the embodiment of this disclosure. The terminal equipment may be a remote terminal equipment. As shown in FIG. 19, the terminal equipment 1900 may include a processor 1901 and a memory 1902, the memory 1902 storing data and a program and being coupled to the processor 1901. It should be noted that this figure is illustrative only, and other types of structures may also be used, so as to supplement or replace this structure and achieve a telecommunications function or other functions.

For example, the processor 1901 may be configured to execute a program to carry out the multi-path communication method in the embodiment of the first aspect. For example, the processor 1901 may be configured to executed the following operations: receiving, by the remote terminal equipment, first indication information transmitted by a relay terminal equipment or second indication information transmitted by a network device; and triggering or transmitting a first PC5-RRC message by the remote terminal equipment to the relay terminal equipment according to the first indication information or the second indication information, the first PC5-RRC message being used to bring the relay terminal equipment into a radio resource control connected state.

For another example, the processor 1901 may be configured to execute a program to carry out the multi-path communication method in the embodiment of the second aspect. For example, the processor 1901 may be configured to executed the following operations: receiving, by the remote terminal equipment, third indication information transmitted by a relay terminal equipment; and not triggering a first PC5-RRC message, or cancelling a first PC5-RRC message, or not transmitting a first PC5-RRC message to the relay terminal equipment, according to the third indication information.

As shown in FIG. 19, the terminal equipment 1900 may further include a communication module 1903, an input unit 1904, a display 1905, and a power supply 1906; wherein functions of the above components are similar to those in the prior art, which shall not be described herein any further. It should be noted that the terminal equipment 1900 does not necessarily include all the parts shown in FIG. 19, and the above components are not necessary. Furthermore, the terminal equipment 1900 may include parts not shown in FIG. 19, and the prior art may be referred to.

The embodiment of this disclosure further provides a relay terminal equipment.

FIG. 20 is a schematic diagram of a structure of the terminal equipment of the embodiment of this disclosure. The terminal equipment may be a relay terminal equipment. As shown in FIG. 20, the terminal equipment 2000 may include a processor 2001 and a memory 2002, the memory 2002 storing data and a program and being coupled to the processor 2001. It should be noted that this figure is illustrative only, and other types of structures may also be used, so as to supplement or replace this structure and achieve a telecommunications function or other functions.

For example, the processor 2001 may be configured to execute a program to carry out the multi-path communication method in the embodiment of the third aspect. For example, the processor 2001 may be configured to executed the following operations: transmitting first indication information by the relay terminal equipment to a remote terminal equipment; and receiving, by the relay terminal equipment, a first PC5-RRC message transmitted by the remote terminal equipment, the first PC5-RRC message being used to bring the relay terminal equipment into an RRC connected state.

For another example, the processor 2001 may be configured to execute a program to carry out the multi-path communication method in the embodiment of the fourth aspect. For example, the processor 2001 may be configured to executed the following operations: transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.

For a further example, the processor 2001 may be configured to execute a program to carry out the multi-path communication method in the embodiment of the fifth aspect. For example, the processor 2001 may be configured to executed the following operations: receiving, by the relay terminal equipment, a first PC5-RRC message transmitted by a remote terminal equipment; and in a case where the relay terminal equipment is in an RRC idle or RRC inactive state, initiating an RRC connection establishment procedure or an RRC resume procedure by the relay terminal equipment.

As shown in FIG. 20, the terminal equipment 2000 may further include a communication module 2003, an input unit 2004, a display 2005, and a power supply 2006; wherein functions of the above components are similar to those in the prior art, which shall not be described herein any further. It should be noted that the terminal equipment 2000 does not necessarily include all the parts shown in FIG. 20, and the above components are not necessary. Furthermore, the terminal equipment 2000 may include parts not shown in FIG. 20, and the prior art may be referred to.

The embodiment of this disclosure further provides a network device, which may be, for example, a base station. However, this disclosure is not limited thereto, and it may also be another network device.

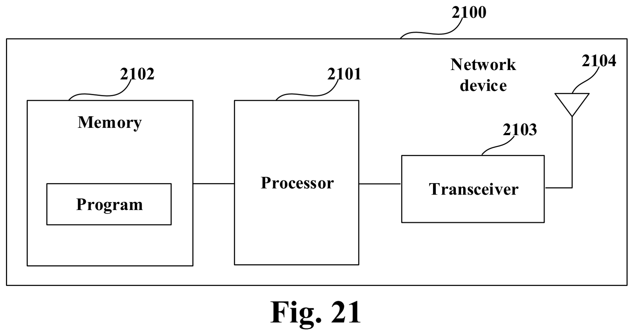

FIG. 21 is a schematic diagram of a structure of the network device of the embodiment of the seventh aspect of this disclosure. As shown in FIG. 21, the network device 2100 may include a processor 2101 (such as a central processing unit (CPU)) and a memory 2102, the memory 2102 being coupled to the processor 2101. Wherein, the memory 2102 may store various data, and furthermore, it may store a program for information processing, and execute the program under control of the processor 2101.

For example, the processor 2101 may be configured to execute a program to carry out the multi-path communication method in the embodiment of the sixth aspect. For example, the processor 2101 may be configured to executed the following operations: transmitting second indication information by the network device to a remote terminal equipment, the second indication information being used to make the remote terminal equipment to transmit first PC5-RRC message to a relay terminal equipment, the first PC5-RRC message being used to bring the relay terminal equipment into an RRC connected state.

Furthermore, as shown in FIG. 21, the network device 2100 may include a transceiver 2103, and an antenna 2105, etc. Wherein, functions of the above components are similar to those in the prior art, and shall not be described herein any further. It should be noted that the network device 2100 does not necessarily include all the parts shown in FIG. 21, and furthermore, the network device 2100 may include parts not shown in FIG. 21, and the prior art may be referred to.

An embodiment of this disclosure provides a computer readable program code, which, when executed in a remote terminal equipment, will cause a computer to carry out the multi-path communication method as described in the embodiment(s) of the first aspect and/or the second aspect in the remote terminal equipment.

An embodiment of this disclosure provides a computer readable medium, including a computer readable program code, which will cause a computer to carry out the multi-path communication method as described in the embodiment(s) of the first aspect and/or the second aspect in a remote terminal equipment.

An embodiment of this disclosure provides a computer readable program code, which, when executed in a relay terminal equipment, will cause a computer to carry out the multi-path communication method as described in the embodiment(s) of the third aspect and/or the fourth aspect in the relay terminal equipment.

An embodiment of this disclosure provides a computer readable medium, including a computer readable program code, which will cause a computer to carry out the multi-path communication method as described in the embodiment(s) of the third aspect and/or the fourth aspect in a relay terminal equipment.

An embodiment of this disclosure provides a computer readable program code, which, when executed in a network device, will cause a computer to carry out the multi-path communication method as described in the embodiment of the sixth aspect in the network device.

An embodiment of this disclosure provides a computer readable medium, including a computer readable program code, which will cause a computer to carry out the multi-path communication method as described in the embodiment of the sixth aspect in a network device.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to implementations containing the above embodiments, following supplements are further disclosed.

Methods at a remote terminal equipment side
1. A multi-path communication method, applicable to a remote terminal equipment, the method including:
   receiving, by the remote terminal equipment, first indication information transmitted by a relay terminal equipment or second indication information transmitted by a network device; and
   triggering or transmitting a first PC5-RRC message by the remote terminal equipment to the relay terminal equipment according to the first indication information or the second indication information, the first PC5-RRC message being used to bring the relay terminal equipment into a radio resource control connected state.
2. The method according to supplement 1, wherein the first indication information includes at least one of the following:
   RRC state information of the relay terminal equipment; or
   first information causing the remote terminal equipment to trigger or transmit the first PC5-RRC message.
3. The method according to supplement 1 or 2, wherein,
   the remote terminal equipment receives the first indication information during a PC5 discovery procedure, or receives the first indication information after the PC5 discovery procedure; and/or,
   the remote terminal equipment receives the first indication information during a PC5 connection establishment procedure with the relay terminal equipment, or receives the first indication information after the PC5 connection establishment procedure with the relay terminal equipment.
4. The method according to any one of supplements 1-3, wherein,
   the remote terminal equipment receives the first indication information before or after receiving the measurement configuration information transmitted by the network device; or
   the remote terminal equipment receives the first indication information before or after transmitting the measurement report to the network device; or
   the remote terminal equipment receives the first indication information before or after receiving the RRC reconfiguration message for adding or changing an indirect path transmitted by the network device.
5. The method according to any one of supplements 1-4, wherein,
   the first indication information is included in a PC5-S message and/or a second PC5-RRC message and/or an MAC CE transmitted by the relay terminal equipment to the remote terminal equipment.
6. The method according to supplement 5, wherein,
   the PC5-S message includes at least one of the following:
   a direct communication request; or
   a direct communication response; and/or
   the second PC5-RRC message includes at least one of the following:
   RRCReconfigurationSidelink;
   RRCReconfigurationCompleteSidelink;
   UEAssistanceInformationSidelink, or
   NotificationMessageSidelink; and/or
   the MAC CE is a new MAC CE.
7. The method according to any one of supplements 1-4, wherein,
   the first indication information is included in a discovery-related message transmitted by the relay terminal equipment to the remote terminal equipment.
8. The method according to supplement 7, wherein,
   the discovery-related message includes at least one of the following:
   a discovery solicitation, or
   a discovery response.
9. The method according to supplement 2, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.
   9A. The method according to supplement 2, wherein,
   the first information causing the remote terminal equipment to trigger or transmit the first PC5-RRC message is 1 bit.
10. The method according to supplement 2, wherein,
   in a case where the RRC state information indicates that the relay terminal equipment is in the RRC idle or RRC inactive state, the remote terminal equipment triggers or transmits the first PC5-RRC message to the relay terminal equipment; or,
   in a case where the first information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment.
11. The method according to supplement 1, wherein the second indication information includes at least one of the following:
   RRC state information of the relay terminal equipment;
   second information causing the remote terminal equipment to trigger or transmit the first PC5-RRC message; or
   an RRC reconfiguration message for adding or changing an indirect path.
12. The method according to supplement 11, wherein,
   the second indication information is received via a direct path.
13. The method according to supplement 11, wherein,
   the RRC state information of the relay terminal equipment and/or the second information causing the remote terminal equipment to trigger or transmit the first PC5-RRC message is/are included in at least one of the following:
   an RRC message;
   a PDCP control PDU;
   an RLC control PDU;
   an MAC CE; or
   DCI.
14. The method according to supplement 13, wherein,
   the RRC message is an RRC reconfiguration message for adding or changing an indirect path.
15. The method according to supplement 11, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.
16. The method according to supplement 11, wherein,
   in a case where the RRC state information indicates that the relay terminal equipment is in an RRC idle state or an RRC inactive state or is not in an RRC connected state, the remote terminal equipment triggers or transmits the first PC5-RRC message to the relay terminal equipment; or,
   in a case where the second information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment; or,
   in a case where the RRC reconfiguration message for adding or changing an indirect path is received, the remote terminal equipment triggers or transmits the first PC5-RRC message to the relay terminal equipment.
17. The method according to supplement 1, wherein the method further includes:
   receiving, by the remote terminal equipment, third indication information transmitted by the relay terminal equipment; and
   not triggering a first PC5-RRC message, or cancelling a first PC5-RRC message, or not transmitting a first PC5-RRC message to the relay terminal equipment, by the remote terminal equipment according to the third indication information.
18. The method according to supplement 17, wherein the not triggering a first PC5-RRC message, or cancelling a first PC5-RRC message, or not transmitting a first PC5-RRC message to the relay terminal equipment, by the remote terminal equipment according to the third indication information, includes:
   in a case where a first serving cell of the relay terminal equipment included in the third indication information is different from a second serving cell to which the remote terminal equipment is connected via a direct path, or in a case where a first serving base station of the relay terminal equipment included in the third indication information is different from a second serving base station to which the remote terminal equipment is connected via a direct path, not triggering the first PC5-RRC message or cancelling the first PC5-RRC message or not transmitting the first PC5-RRC message by the remote terminal equipment to the relay terminal equipment.
19. The method according to supplement 17 or 18, wherein,
   the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell to which the remote terminal equipment is connected via a direct path; or
   information on that the first serving base station of the relay terminal equipment is different from the second serving base station to which the remote terminal equipment is connected via a direct path.
20. The method according to supplement 19, wherein,
   the information on that the relay terminal equipment changes a serving cell or a serving base station includes:
   information on that the relay terminal equipment performs cell selection or cell reselection or handover.
21. The method according to any one of supplements 17-20, wherein,
   the third indication information is included in the discovery-related message or the second PC5-RRC message transmitted by the relay terminal equipment to the remote terminal equipment.
22. The method according to supplement 1, wherein,
   the first PC5-RRC message include PC5-RRC trigger, the PC5-RRC trigger being used to trigger the relay terminal equipment to enter the RRC connected state.
23. The method according to supplement 22, wherein,
   the first PC5-RRC message is a new PC5-RRC message or an existing PC5-RRC message; or
   the PC5-RRC trigger is included as a new IE in a new PC5-RRC message or an existing PC5-RRC message
24. The method according to any one of supplements 1, 22 and 23, wherein,
   the first PC5-RRC message includes at least one of the following:
   RemoteUEInformationSidelink;
   RRCReconfigurationSidelink;
   RRCReconfigurationCompleteSidelink, or
   UEAssistanceInformationSidelink.
25. The method according to supplement 23, wherein,
   the IE is 1 bit, or,
   the IE is optional.
26. A multi-path communication method, applicable to a remote terminal equipment, the method including:
   receiving, by the remote terminal equipment, third indication information transmitted by a relay terminal equipment; and
   not triggering a first PC5-RRC message, or cancelling a first PC5-RRC message, or not transmitting a first PC5-RRC message to the relay terminal equipment, by the remote terminal equipment according to the third indication information.
27. The method according to supplement 26, wherein the not triggering a first PC5-RRC message, or cancelling a first PC5-RRC message, or not transmitting a first PC5-RRC message to the relay terminal equipment, by the remote terminal equipment according to the third indication information, includes:
   in a case where a first serving cell of the relay terminal equipment included in the third indication information is different from a second serving cell to which the remote terminal equipment is connected via a direct path, or in a case where a first serving base station of the relay terminal equipment included in the third indication information is different from a second serving base station to which the remote terminal equipment is connected via a direct path, not triggering a first PC5-RRC message, or cancelling a first PC5-RRC message, or not transmitting a first PC5-RRC message by the remote terminal equipment to the relay terminal equipment.
28. The method according to supplement 26 or 27, wherein,
   the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell to which the remote terminal equipment is connected via a direct path; or
   information on that the first serving base station of the relay terminal equipment is different from the second serving base station to which the remote terminal equipment is connected via a direct path.
29. The method according to supplement 28, wherein,
   the information on that the relay terminal equipment changes a serving cell or a serving base station includes:
   information on that the relay terminal equipment performs cell selection or cell reselection or handover.
30. The method according to any one of supplements 26-29, wherein,
   the third indication information is included in the discovery-related message or the second PC5-RRC message transmitted by the relay terminal equipment to the remote terminal equipment.

### Apparatuses at a relay terminal equipment side

1. A multi-path communication apparatus, configured in a relay terminal equipment, the apparatus including:
   a transmitting unit configured to transmit first indication information to a remote terminal equipment; and
   a receiving unit configured to receive a first PC5-RRC message transmitted by the remote terminal equipment, the first PC5-RRC message being used to bring the relay terminal equipment into a radio resource control connected state.
2. The apparatus according to supplement 1, wherein the first indication information includes at least one of the following:
   RRC state information of the relay terminal equipment; or
   first information causing the remote terminal equipment to trigger or transmit the first PC5-RRC message.
3. The apparatus according to supplement 1 or 2, wherein,
   the relay terminal equipment transmits the first indication information during a PC5 discovery procedure, or transmit the first indication information after the PC5 discovery procedure; and/or,
   the relay terminal equipment transmits the first indication information during a PC5 connection establishment procedure with the remote terminal equipment, or transmits the first indication information after the PC5 connection establishment procedure with the remote terminal equipment.
4. The apparatus according to any one of supplements 1-3, wherein,
   the first indication information is included in the PC5-S message and/or the second PC5-RRC message and/or MAC CE transmitted by the relay terminal equipment to the remote terminal equipment.
5. The apparatus according to supplement 4, wherein,
   the PC5-S message includes at least one of the following:
   a direct communication request; or
   a direct communication response;
      and/or
   the second PC5-RRC message includes at least one of the following:
   RRCReconfigurationSidelink;
   RRCReconfigurationCompleteSidelink;
   UEAssistanceInformationSidelink; or
   NotificationMessageSidelink;
      and/or
   the MAC CE is a new MAC CE.
6. The apparatus according to any one of supplements 1-3, wherein,
   the first indication information is included in a discovery-related message transmitted by the relay terminal equipment to the remote terminal equipment.
7. The apparatus according to supplement 6, wherein,
   the discovery-related message includes at least one of the following:
   a discovery solicitation; or,
   a discovery response.
8. The apparatus according to supplement 2, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.
   8A. The apparatus according to supplement 2, wherein,
   the first information causing the remote terminal equipment to trigger or transmit the first PC5-RRC message is 1 bit.
9. The apparatus according to supplement 1, wherein,
   the transmitting unit transmits to the remote terminal equipment third indication information making the remote terminal equipment not to trigger a first PC5-RRC message or to cancel a first PC5-RRC message or not to transmit a first PC5-RRC message to the relay terminal equipment.
10. The apparatus according to supplement 9, wherein the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell connected to the remote terminal equipment via a direct path; or
   information on that the first serving base station of the relay terminal equipment is different from the second serving base station connected to the remote terminal equipment via a direct path.
11. The apparatus according to supplement 10, wherein,
   the information on that the relay terminal equipment changes a serving cell or a serving base station includes:
   information on that the relay terminal equipment performs cell selection or cell reselection or handover.
12. The apparatus according to any one of supplements 9-11, wherein,
   the third indication information is included in a discovery-related message or a second PC5-RRC message transmitted by the relay terminal equipment to the remote terminal equipment.
13. The apparatus according to supplement 1, wherein,
   the first PC5-RRC message includes PC5-RRC trigger, the PC5-RRC trigger being used to trigger the relay terminal equipment to enter an RRC connected state.
14. The apparatus according to supplement 13, wherein,
   the first PC5-RRC message is a new PC5-RRC message or an existing PC5-RRC message; or
   the PC5-RRC trigger is included as a new IE in a new PC5-RRC message or an existing PC5-RRC message.
15. The apparatus according to any one of supplements 1, 13 and 14, wherein, the first PC5-RRC message includes at least one of the following:
   RemoteUEInformationSidelink;
   RRCReconfigurationSidelink;
   RRCReconfigurationCompleteSidelink; or
   UEAssistanceInformationSidelink.
16. The apparatus according to supplement 14, wherein,
   the IE is 1 bit, or,
   the IE is optional.
17. The apparatus according to supplement 1, wherein the apparatus further includes:
   a processing unit configured to initiate an RRC connection establishment procedure or an RRC resume procedure according to the first PC5-RRC message.
18. A multi-path communication apparatus, configured in a relay terminal equipment, the apparatus including:
   a transmitting unit configured to transmit to a remote terminal equipment third indication information making the remote terminal equipment not to trigger a first PC5-RRC message or to cancel a first PC5-RRC message or not to transmit a first PC5-RRC message to the relay terminal equipment.
19. The apparatus according to supplement 18, wherein the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell to which the remote terminal equipment is connected via a direct path; or
   information on that the first serving base station of the relay terminal equipment is different from the second serving base station to which the remote terminal equipment is connected via a direct path.
20. The apparatus according to supplement 19, wherein,
   the information on that the relay terminal equipment changes a serving cell or a serving base station includes:
   information on that the relay terminal equipment performs cell selection or cell reselection or handover.
21. The apparatus according to any one of supplements 18-20, wherein,
   the third indication information is included in a discovery-related message or a second PC5-RRC message transmitted by the relay terminal equipment to the remote terminal equipment.
22. A multi-path communication apparatus, configured in a relay terminal equipment, the apparatus including:
   a receiving unit configured to receive a first PC5-RRC message transmitted by a remote terminal equipment; and
   a processing unit configured to initiate an RRC connection establishment procedure or an RRC resume procedure in a case where the relay terminal equipment is in an RRC idle or RRC inactive state.
23. The apparatus according to supplement 22, wherein,
   the relay terminal equipment ignores the first PC5-RRC message in a case where the relay terminal equipment is in the RRC connected state.
24. The apparatus according to supplement 22, wherein,
   the first PC5-RRC message includes PC5-RRC trigger, the PC5-RRC trigger being used to trigger the relay terminal equipment to enter an RRC connected state.
25. The apparatus according to supplement 24, wherein,
   the first PC5-RRC message is a new PC5-RRC message or an existing PC5-RRC message; or
   the PC5-RRC trigger is included as a new IE in a new PC5-RRC message or an existing PC5-RRC message.
26. The apparatus according to supplement 22, wherein,
   the first PC5-RRC message includes at least one of the following:
   RemoteUEInformationSidelink;
   RRCReconfigurationSidelink;
   RRCReconfigurationCompleteSidelink; or
   UEAssistanceInformationSidelink.
27. The apparatus according to supplement 25, wherein,
   the IE is 1 bit, or, the IE is optional.

### Methods at a relay terminal equipment side

1. A multi-path communication method, applicable to a relay terminal equipment, the method including:
   transmitting first indication information by the relay terminal equipment to a remote terminal equipment; and
   receiving, by the relay terminal equipment, a first PC5-RRC message transmitted by the remote terminal equipment, the first PC5-RRC message being used to bring the relay terminal equipment into an RRC connected state.
2. The method according to supplement 1, wherein the first indication information includes at least one of the following:
   RRC state information of the relay terminal equipment; or
   first information causing the remote terminal equipment to trigger or transmit the first PC5-RRC message.
3. The method according to supplement 1 or 2, wherein,
   the relay terminal equipment transmits the first indication information during a PC5 discovery procedure, or transmits the first indication information after the PC5 discovery procedure; and/or,
   the relay terminal equipment transmits the first indication information during a PC5 connection establishment procedure with the remote terminal equipment, or transmits the first indication information after the PC5 connection establishment procedure with the remote terminal equipment.
4. The method according to any one of supplements 1-3, wherein,
   the first indication information is included in the PC5-S message and/or the second PC5-RRC message and/or MAC CE transmitted by the relay terminal equipment to the remote terminal equipment.
5. The method according to supplement 4, wherein
   the PC5-S message includes at least one of the following:
   a direct communication request; or
   a direct communication response;
      and/or
   the second PC5-RRC message includes at least one of the following:
      RRCReconfigurationSidelink;
      RRCReconfigurationCompleteSidelink;
      UEAssistanceInformationSidelink; or
      NotificationMessageSidelink;
         and/or
      the MAC CE is a new MAC CE.
6. The method according to any one of supplements 1-3, wherein,
   the first indication information is included in a discovery-related message transmitted by the relay terminal equipment to the remote terminal equipment.
7. The method according to supplement 6, wherein,
   the discovery-related message includes at least one of the following:
   a discovery solicitation; or,
   a discovery response.
8. The method according to supplement 2, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.
   8A. The method according to supplement 2, wherein,
   the first information causing the remote terminal equipment to trigger or transmit the first PC5-RRC message is 1 bit.
9. The method according to supplement 1, wherein the method further includes:
   transmitting by the relay terminal equipment to the remote terminal equipment third indication information making the remote terminal equipment not to trigger a first PC5-RRC message or to cancel a first PC5-RRC message or not to transmit a first PC5-RRC message to the relay terminal equipment.
10. The method according to supplement 9, wherein the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell connected to the remote terminal equipment via a direct path; or
   information on that the first serving base station of the relay terminal equipment is different from the second serving base station connected to the remote terminal equipment via a direct path.
11. The method according to supplement 10, wherein,
   the information on that the relay terminal equipment changes a serving cell or a serving base station includes:
   information on that the relay terminal equipment performs cell selection or cell reselection or handover.
12. The method according to any one of supplements 9-11, wherein,
   the third indication information is included in a discovery-related message or a second PC5-RRC message transmitted by the relay terminal equipment to the remote terminal equipment.
13. The method according to supplement 1, wherein,
   the first PC5-RRC message includes PC5-RRC trigger, the PC5-RRC trigger being used to trigger the relay terminal equipment to enter an RRC connected state.
14. The method according to supplement 13, wherein,
   the first PC5-RRC message is a new PC5-RRC message or an existing PC5-RRC message; or
   the PC5-RRC trigger is included as a new IE in a new PC5-RRC message or an existing PC5-RRC message.
15. The method according to any one of supplements 1, 13 and 14, wherein,
   the first PC5-RRC message includes at least one of the following:
   RemoteUEInformationSidelink;
   RRCReconfigurationSidelink;
   RRCReconfigurationCompleteSidelink; or
   UEAssistanceInformationSidelink.
16. The method according to supplement 14, wherein,
   the IE is 1 bit, or,
   the IE is optional.
17. The method according to supplement 1, wherein the method further includes:
   initiating an RRC connection establishment procedure or an RRC resume procedure by the relay terminal equipment according to the first PC5-RRC message.
18. A multi-path communication method, applicable to a relay terminal equipment, the method including:
   transmitting by the relay terminal equipment to a remote terminal equipment third indication information making the remote terminal equipment not to trigger a first PC5-RRC message or to cancel a first PC5-RRC message or not to transmit a first PC5-RRC message to the relay terminal equipment.
19. The method according to supplement 18, wherein the third indication information includes at least one of the following:
   information on a first serving cell or a first serving base station of the relay terminal equipment;
   information on that the relay terminal equipment changes a serving cell or a serving base station;
   information on that the first serving cell of the relay terminal equipment is different from the second serving cell to which the remote terminal equipment is connected via a direct path; or
   information on that the first serving base station of the relay terminal equipment is different from the second serving base station to which the remote terminal equipment is connected via a direct path.
20. The method according to supplement 19, wherein,
   the information on that the relay terminal equipment changes a serving cell or a serving base station includes:
   information on that the relay terminal equipment performs cell selection or cell reselection or handover.
21. The method according to any one of supplements 18-20, wherein,
   the third indication information is included in a discovery-related message or a second PC5-RRC message transmitted by the relay terminal equipment to the remote terminal equipment.
22. A multi-path communication method, applicable to a relay terminal equipment, the method including:
   receiving, by the relay terminal equipment a first PC5-RRC message transmitted by a remote terminal equipment; and
   initiating an RRC connection establishment procedure or an RRC resume procedure by the relay terminal equipment in a case where the relay terminal equipment is in an RRC idle or RRC inactive state.
23. The method according to supplement 22, wherein,
   the relay terminal equipment ignores the first PC5-RRC message in a case where the relay terminal equipment is in the RRC connected state.
24. The method according to supplement 22, wherein,
   the first PC5-RRC message includes PC5-RRC trigger, the PC5-RRC trigger being used to trigger the relay terminal equipment to enter an RRC connected state.
25. The method according to supplement 24, wherein,
   the first PC5-RRC message is a new PC5-RRC message or an existing PC5-RRC message; or
   the PC5-RRC trigger is included as a new IE in a new PC5-RRC message or an existing PC5-RRC message.
26. The method according to supplement 22, wherein,
   the first PC5-RRC message includes at least one of the following:
   RemoteUEInformationSidelink;
   RRCReconfigurationSidelink;
   RRCReconfigurationCompleteSidelink; or
   UEAssistanceInformationSidelink.
27. The method according to supplement 25, wherein,
   the IE is 1 bit, or, the IE is optional.

### An apparatus at a network device side

1. A multi-path communication apparatus, configured in a network device, the apparatus including:
   a transmitting unit configured to transmit second indication information to a remote terminal equipment, the second indication information being used to make the remote terminal equipment to trigger or transmit first PC5-RRC message to the relay terminal equipment, the first PC5-RRC message being used to bring the relay terminal equipment into an RRC connected state.
2. The apparatus according to supplement 1, wherein the second indication information includes at least one of the following:
   RRC state information of the relay terminal equipment;
   second information causing the remote terminal equipment to trigger or transmit the first PC5-RRC message; or
   an RRC reconfiguration message for adding or changing an indirect path.
3. The apparatus according to supplement 1 or 2, wherein,
   the second indication information is transmitted via a direct path.
4. The apparatus according to supplement 2, wherein,
   the RRC state information of the relay terminal equipment and/or the second information causing the remote terminal equipment to trigger or transmit the first PC5-RRC message is/are included in at least one of the following:
   an RRC message;
   a PDCP control PDU;
   an RLC control PDU;
   an MAC CE; or
   DCI.
5. The apparatus according to supplement 4, wherein,
   the RRC message is an RRC reconfiguration message for adding or changing an indirect path.
6. The apparatus according to supplement 2, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.
   A method at a network device side

1. A multi-path communication method, applicable to a network device, the method including:
   transmitting second indication information by the network device to a remote terminal equipment, the second indication information being used to make the remote terminal equipment to trigger or transmit first PC5-RRC message to the relay terminal equipment, the first PC5-RRC message being used to bring the relay terminal equipment into an RRC connected state.
2. The method according to supplement 1, wherein the second indication information includes at least one of the following:
   RRC state information of the relay terminal equipment;
   second information causing the remote terminal equipment to trigger or transmit the first PC5-RRC message; or
   an RRC reconfiguration message for adding or changing an indirect path.
3. The method according to supplement 1 or 2, wherein,
   the second indication information is transmitted via a direct path.
4. The method according to supplement 2, wherein,
   the RRC state information of the relay terminal equipment and/or the second information causing the remote terminal equipment to trigger or transmit the first PC5-RRC message is/are included in at least one of the following:
   an RRC message;
   a PDCP control PDU;
   an RLC control PDU;
   an MAC CE; or
   DCI.
5. The method according to supplement 4, wherein,
   the RRC message is an RRC reconfiguration message for adding or changing an indirect path.
6. The method according to supplement 2, wherein,
   the RRC state information includes at least one of the following:
   information on the RRC state of the relay terminal equipment;
   information on whether the relay terminal equipment is in the RRC connected state; or
   information on whether the relay terminal equipment is in the RRC idle or RRC inactive state.

## Claims

1. A multi-path communication apparatus, configured in a remote terminal equipment, the apparatus comprising:
a receiving unit configured to receive first indication information transmitted by a relay terminal equipment or second indication information transmitted by a network device; and
a processing unit configured to trigger or transmit a first PC5-RRC message to the relay terminal equipment according to the first indication information or the second indication information, the first PC5-RRC message being used to bring the relay terminal equipment into a radio resource control connected state.

2. The apparatus according to claim 1, wherein the first indication information comprises at least one of the following:
radio resource control state information of the relay terminal equipment; or
first information causing the remote terminal equipment to trigger or transmit the first PC5-RRC message.

3. The apparatus according to claim 1, wherein,
the remote terminal equipment receives the first indication information during or after a PC5 discovery procedure; and/or,
the remote terminal equipment receives the first indication information during or after a PC5 connection establishment procedure with the relay terminal equipment; and/or,
the remote terminal equipment receives the first indication information before or after receiving measurement configuration information transmitted by the network device; and/or,
the remote terminal equipment receives the first indication information before or after transmitting a measurement report to the network device; and/or,
the remote terminal equipment receives the first indication information before or after receiving a radio resource control reconfiguration message for adding or changing an indirect path transmitted by the network device.

4. The apparatus according to claim 1, wherein,
the first indication information is included in a PC5-S message or a second PC5-RRC message or a media access control control element transmitted by the relay terminal equipment to the remote terminal equipment; and/or
the first indication information is included in a discovery-related message transmitted by the relay terminal equipment to the remote terminal equipment.

5. The apparatus according to claim 4, wherein,
the PC5-S message includes at least one of the following:
a direct communication request; or
a direct communication response;
and/or
the second PC5-RRC message includes at least one of the following:
a radio resource control reconfiguration sidelink RRCReconfigurationSidelink;
a radio resource control reconfiguration complete sidelink RRCReconfigurationCompleteSidelink;
a user equipment assistance information sidelink UEAssistanceInformationSidelink; or
a notification message sidelink NotificationMessageSidelink;
and/or
the media access control control element is a new media access control control element;
and/or
the discovery-related message comprises at least one of the following:
a discovery solicitation; or
a discovery response.

6. The apparatus according to claim 2, wherein,
the radio resource control state information comprises at least one of the following:
information on the radio resource control state of the relay terminal equipment;
information on whether the relay terminal equipment is in a radio resource control connected state; or
information on whether the relay terminal equipment is in a radio resource control idle state or a radio resource control inactive state;
and/or
the first information causing the remote terminal equipment to trigger or transmit the first PC5-RRC message is 1 bit.

7. The apparatus according to claim 2, wherein,
in a case where the radio resource control state information indicates that the relay terminal equipment is in a radio resource control idle state or a radio resource control inactive state or is not in a radio resource control connected state, the remote terminal equipment triggers or transmits the first PC5-RRC message to the relay terminal equipment; or,
in a case where the first information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment.

8. The apparatus according to claim 1, wherein the second indication information comprises at least one of the following:
radio resource control state information of the relay terminal equipment;
second information causing the remote terminal equipment to trigger or transmit the first PC5-RRC message; or
a radio resource control reconfiguration message for adding or changing an indirect path.

9. The apparatus according to claim 8, wherein,
the second indication information is received via a direct path.

10. The apparatus according to claim 8, wherein,
the radio resource control state information of the relay terminal equipment and/or the second information causing the remote terminal equipment to trigger or transmit the first PC5-RRC message is/are included in at least one of the following:
a radio resource control message;
a packet data convergence protocol control protocol data unit PDCP control PDU;
a radio link control control protocol data unit RLC control PDU;
a media access control control element MAC CE; or
downlink control information DCI.

11. The apparatus according to claim 8, wherein,
in a case where the radio resource control state information indicates that the relay terminal equipment is in a radio resource control idle state or a radio resource control inactive state or is not in a radio resource control connected state, the remote terminal equipment triggers or transmits the first PC5-RRC message to the relay terminal equipment; or,
in a case where the second information causing the remote terminal equipment to trigger or transmit the first PC5-RRC message instructs the remote terminal equipment to trigger or transmit the first PC5-RRC message, the remote terminal equipment triggers or transmits the first PC5-RRC message to the relay terminal equipment; or,
in a case where the radio resource control reconfiguration message for adding or changing an indirect path is received, the remote terminal equipment triggers or transmits the first PC5-RRC message to the relay terminal equipment.

12. The apparatus according to claim 1, wherein,
the receiving unit further receives third indication information transmitted by the relay terminal equipment,
and according to the third indication information, the processing unit does not trigger the first PC5-RRC message, or cancels the first PC5-RRC message, or does not transmit the first PC5-RRC message to the relay terminal equipment.

13. The apparatus according to claim 12, wherein,
in a case where a first serving cell of the relay terminal equipment included in the third indication information is different from a second serving cell connected to the remote terminal equipment via a direct path, or in a case where a first serving base station of the relay terminal equipment included in the third indication information is different from a second serving base station connected to the remote terminal equipment via a direct path, the remote terminal equipment does not trigger the first PC5-RRC message or cancels the first PC5-RRC message, or does not transmit the first PC5-RRC message to the relay terminal equipment.

14. The apparatus according to claim 12, wherein the third indication information comprises at least one of the following:
information on a first serving cell or a first serving base station of the relay terminal equipment;
information on that the relay terminal equipment changes a serving cell or a serving base station;
information on that the first serving cell of the relay terminal equipment is different from the second serving cell connected to the remote terminal equipment via a direct path; or
information on that the first serving base station of the relay terminal equipment is different from the second serving base station connected to the remote terminal equipment via a direct path.

15. The apparatus according to claim 12, wherein,
the third indication information is included in a discovery-related message or a second PC5-RRC message transmitted by the relay terminal equipment to the remote terminal equipment.

16. The apparatus according to claim 1, wherein,
the first PC5-RRC message includes PC5-RRC trigger, the PC5-RRC trigger being used to trigger the relay terminal equipment to enter a radio resource control connected state.

17. The apparatus according to claim 16, wherein,
the first PC5-RRC message is a new PC5-RRC message or an existing PC5-RRC message; or
the PC5-RRC trigger is included as a new information element in a new PC5-RRC message or an existing PC5-RRC message.

18. The apparatus according to claim 1, wherein the first PC5-RRC message comprises at least one of the following:
a remote user equipment information sidelink RemoteUEInformationSidelink;
a radio resource control reconfiguration sidelink RRCReconfigurationSidelink;
a radio resource control reconfiguration complete sidelink RRCReconfigurationCompleteSidelink; or
a user equipment assistance information sidelink UEAssistanceInformationSidelink.

19. A multi-path communication apparatus, configured in a remote terminal equipment, the apparatus comprising:
a receiving unit configured to receive third indication information transmitted by a relay terminal equipment; and
a processing unit configured to not to trigger a first PC5-RRC message, or configured to cancel a first PC5-RRC message, or configured to not to transmit a first PC5-RRC message to the relay terminal equipment, according to the third indication information.

20. A multi-path communication apparatus, configured in a relay terminal equipment, the apparatus comprising:
a transmitting unit configured to transmit first indication information to a remote terminal equipment; and
a receiving unit configured to receive a first PC5-RRC message transmitted by the remote terminal equipment, the first PC5-RRC message being used to bring the relay terminal equipment into a radio resource control connected state.
